## Europäisches Patentamt
## European Patent Office
## Office européen des brevets

(19)

(11) Numéro de publication: **0 038 297**
**B1**

(12) **FASCICULE DE BREVET EUROPEEN**

(45) Date de publication du fascicule du brevet:
**18.07.84**

(21) Numéro de dépôt: **81810123.0**

(22) Date de dépôt: **26.03.81**

(51) Int. Cl.³: **B 23 K 26/02,** B 23 K 26/08

(54) **Procédé d'ébavurage d'un instrument acéré, dispositif de mise en oeuvre du procédé et instrument acéré obtenu par le procédé.**

(30) Priorité: **10.04.80 CH 2749/80**
**28.04.80 FR 8009582**

(43) Date de publication de la demande:
**21.10.81 Bulletin 81/42**

(45) Mention de la délivrance du brevet:
**18.07.84 Bulletin 84/29**

(84) Etats contractants désignés:
**AT DE GB IT NL**

(56) Documents cités:
**FR - A - 2 333 592**
**US - A - 4 081 655**

(73) Titulaire: **LASAG AG, Bernstrasse 11, CH-3600 Thun (CH)**

(72) Inventeur: **Steffen, Jürg, CH-3655 Sigriswil (CH)**

(74) Mandataire: **Schneider, Jürg et al, c/o Société Générale de l'Horlogerie Suisse S.A. ASUAG Faubourg du Lac 6, CH-2501 Bienne (CH)**

## Description

La présente invention est relative à un procédé d'ébavurage notamment d'instrument acéré, au dispositif de mise en œuvre du procédé et à l'instrument tel qu'un instrument de chirurgie obtenu par le procédé.

Dans la technique relative à l'usinage d'instruments acérés, notamment de pièces utilisées en microtechnique, le problème de l'ébavurage des arêtes vives, c'est-à-dire des arêtes constituées par l'intersection de deux plans ou surfaces planes délimitant la forme de l'instrument et formant un angle dièdre inférieur à 180°, reste un problème majeur pour l'obtention d'une finition convenable. Le plus souvent les tolérances quant aux dimensions des ébarbures admissibles au niveau des arêtes vives sont très strictes et ces dernières ne doivent en aucun cas être supérieures aux tolérances de dimensionnement du produit ou pièce mécanique final.

Ainsi, dans le cas d'instruments acérés telles que des instruments tranchants, en particulier instruments de chirurgie, la présence d'ébarbures sur le fil de coupe de l'instrument ne permet pas, lors de l'utilisation de ces instruments, d'effectuer des incisions engendrant des plaies à lèvres exemptes de toute déchirure. De plus, au cours d'une intervention, le risque de souillure de la plaie par les ébarbures arrachées au fil de l'instrument reste non négligeable en particulier lors d'intervention de microchirurgie ophtalmologique.

Différentes solutions au problème de l'ébavurage ont été proposées afin de réduire au maximum l'existence et la taille des ébarbures sur les arêtes des pièces mécaniques.

De manière générale, le type de traitement d'ébavurage retenu est fonction des dimensions extérieures de la pièce, du degré de finition admissible des surfaces de la pièce et de la perte de dimension admissible. Un répertoire de ces traitements en fonction des paramètres précités a été publié dans la revue »Precision Engineering« volume 1, no 4, oct. 1979, p. 189 à 198.

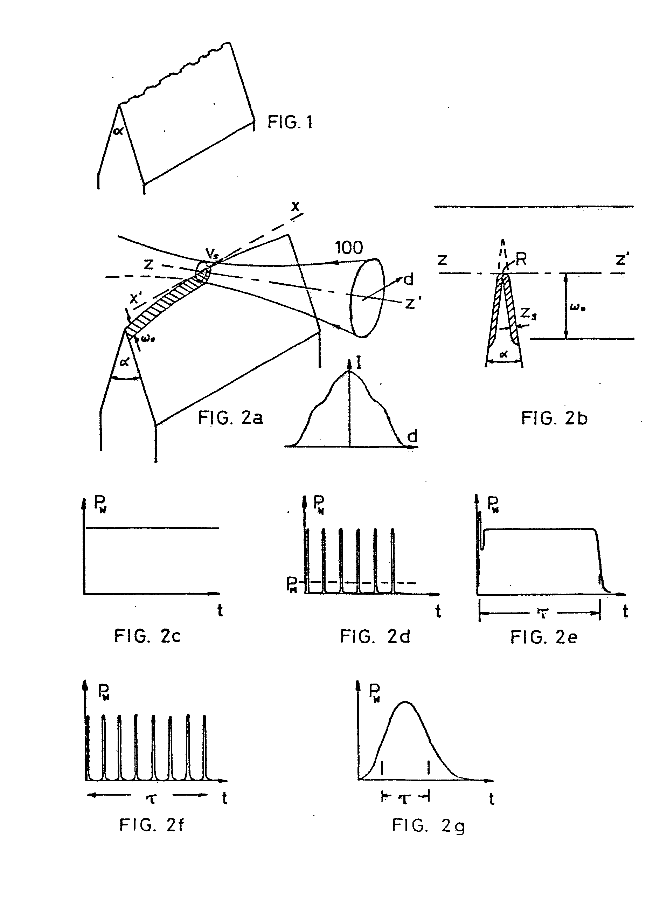

Dans le cas de l'ébavurage d'instruments de chirurgie et plus particulièrement de l'ébavurage d'instruments de microchirurgie, le procédé couramment utilisé actuellement consiste en un traitement du type électrochimique. Ainsi que représenté figure 1, le fil de l'instrument comporte une série d'aspérités rugueuses provenant du meulage de l'instrument et pouvant atteindre jusqu'à 7 à 8 μm pour lequel le traitement électrochimique reste peu satisfaisant compte tenu des effets de pointe sur le champ électrique inhérents à la forme même de l'instrument.

Le procédé selon l'invention permet de remédier aux inconvénients précités et a pour objet un procédé d'ébavurage d'un instrument acéré comportant une arête vive au moyen d'un dispositiv entièrement automatique.

Un autre objet de la présente invention est un dispositif d'ébavurage de tels instruments acérés.

Un autre objet de la présente invention est un instrument acéré obtenu par la mise en œuvre du procédé selon l'invention.

Le procédé d'ébavurage d'un instrument acéré comportant une arête vive affûtée pour constituer le fil de l'instrument, selon l'invention consiste à

— émettre un faisceau de rayonnement laser de densité de puissance comprise entre $10^6$ et $10^8$ W/cm², 
— focaliser sur l'arête de l'instrument le faisceau laser de manière que l'axe du faisceau laser et la tangente au fil de l'instrument soient sensiblement concourants, et 
— déplacer le spot de focalisation du faisceau laser sur la totalité du fil de l'instrument acéré à une vitesse déterminée pour assurer la fusion du mofil dans la zone centrale du faisceau laser.

Le dispositif d'ébavurage d'un instrument acéré comportant une arête vive affutée pour constituer le fil de l'instrument, selon l'invention comprend:

— des moyens pour engendrer un rayonnement laser de densité de puissance comprise entre $10^6$ et $10^8$ W/cm², 
— des moyens pour focaliser le faisceau laser sur l'arête de l'instrument de manière que l'axe du faisceau laser et la tangente au fil de l'instrument soient sensiblement concourants, et 
— des moyens pour déplacer le spot de focalisation du faisceau laser sur la totalité du fil de l'instrument acéré à une vitesse déterminée, pour assurer la fusion du morfil dans la zone centrale du faisceau laser.

Le procédé selon l'invention permet, en particulier, l'obtention d'instruments acérés d'angle d'aiguisage $\alpha$ déterminé, le fil de l'instrument étant constitué par une surface gauche de rayon de courbure R sensiblement uniforme, la zone sous-jascente du fil comportant, sur la paroi de l'instrument, une bande de matériau vitrifié de dimension $\omega$o suivant une première direction parallèle à une génératrice de la paroi de l'instrument et d'épaisseur Zs selon une deuxième direction perpendiculaire à cette première direction. Le rayon de courbure R de la surface gauche constituant le fil est de la forme

$$R = Zs \frac{1}{1 - \sin \frac{\alpha}{2}}.$$

La bande de matériau vitrifié et la surface gauche constituant le fil présentent une rugosité inférieure à 5 μm.

L'invention peut être utilisée pour toute opération d'ébavurage ou d'émorfilage d'instruments acérés en matériaux tels que notamment métaux, aciers spéciaux, alliages, verre, obsidienne,
céramiques, corindons, métaux frittés.

L'invention sera mieux comprise à l'aide de la
description et des dessins ci-après où les cotes
et proportions relatives n'ont pas été respectées
afin d'assurer une meilleure compréhension et
dans lesquels outre la figure 1 relative à l'art
antérieur,

les figures 2a, 2b, 2c, 2d, 2e, 2f, 2g sont relatives au procédé selon l'invention et à différents
paramètres d'étapes de ce procédé,

les figures 3a et 3b sont relatives à un procédé de fabrication d'instruments tranchants du
type instrument de chirurgie permettant un
émorfilage du fil de l'instrument conformément
à l'invention,

les figures 4a à 4d représentent un dispositif
de mise en œuvre du procédé et des détails de
réalisation de ce dispositif conformément à l'invention,

la figure 5 représente un autre détail de réalisation du dispositif représenté figure 4a,

la figure 6 représente une variante de réalisation du dispositif selon l'invention représenté figure 4a,

les figures 7a à 7c représentent différents
types d'instruments acérés obtenus par le procédé à l'invention.

Selon la figure 2a, le procédé d'ébavurage
d'un instrument acéré selon l'invention consiste,
après usinage de l'instrument comportant de ce
fait des arêtes de l'instrument un faisceau de
rayonnement laser 100 de densité de puissance
comprise entre $10^6$ et $10^8$ W/cm$^2$ de manière que
l'axe du faisceau laser et la tangente au fil de
l'instrument soient sensiblement concourants.
Un déplacement relatif du spot de focalisation
du faisceau laser et des arêtes de la pièce est
assuré sur la totalité des arêtes à une vitesse de
déplacement déterminée pour provoquer au
point de focalisation une fusion et une volatilisation des ébarbures de l'arête. Le faisceau laser
100 a une répartition d'intensité Ia en fonction de
la distance d à l'axe ZZ' du faisceau sensiblement uniforme, l'intensité maximale du faisceau
étant distribuée au voisinage de l'axe.

Ainsi que représenté de manière non limitative
figure 2a, le procédé selon l'invention est particulièrement adapté à l'ébavurage d'instruments
tranchants ou acérés. Le procédé selon l'invention consiste, pour l'ébavurage de ces instruments après affûtage de ces derniers selon un
angle d'aiguisage $\alpha$ déterminé afin de constituer
le fil de coupe ou fil de l'instrument, à focaliser
ledit faisceau de rayonnement laser sur la partie
acérée de l'instrument. Afin d'obtenir un traitement aussi homogène que possible sur toute la
longueur du fil, l'axe du faisceau laser ZZ' et la
tangente au fil de l'instrument repérée sur la figure 2a par la direction x'x sont sensiblement
concourants. Le spot de focalisation du faisceau
laser 100 est déplacé sur la totalité du fil de l'instrument pour assurer la fusion du morfil dans la
zone centrale du spot de focalisation du faisceau laser, l'axe ZZ' du faisceau laser et la tangente au
fil x'x de l'instrument étant sensiblement maintenus concourants au cours de ce déplacement. Le
déplacement du spot du faisceau laser permet
en outre d'effectuer une vitrification des zones
superficielles sous-jacentes du fil de l'instrument. La densité de puissance élevée et par cela
la vitesse de déplacement du spot sur le fil de
l'instrument permet un refroidissement rapide
des couches superficielles en fusion après impact du faisceau laser, ce refroidissement donnant lieu à un phénomène analogue à celui de la
trempe pour les métaux. Des gradients de température de l'ordre de $5 \times 10^8$ °C/s sont possibles dans l'acier par exemple. Les couches superficielles et le fil présentent de ce fait un aspect vitrifié et une dureté dans un rapport de 1 à
3, pour un matériau donné, par rapport aux parties de l'instrument non soumises au traitement.
Le procédé selon l'invention permet également
de contrôler la forme finale du fil de l'instrument
ou de la pièce à traiter par déformation contrôlée
du morfil en fusion du fait de la tension superficielle du matériau en fusion. Ainsi que représenté figure 2b, pour un instrument acéré comportant un angle d'aiguisage $\alpha$ déterminé, la vitrification d'une bande de matériau sur zone superficielle sous-jacente au fil de dimension $\omega o$
selon une première direction parallèle à une génératrice de la paroi de l'instrument et d'épaisseur Zs prédéterminée selon une deuxième direction perpendiculaire à cette première direction permet la formation d'un fil de coupe constitué sensiblement par une surface gauche de
rayon de courbure R, selon une section droite du
fil, sensiblement égal à

$$R = Zs \ \frac{1}{1 - \sin \dfrac{\alpha}{2}}$$

du fait des paramètres géométriques de l'instrument et de la déformation du matériau en fusion
sous l'action de la tension superficielle du matériau fondu. La déformation de ce matériau se
poursuit jusqu'à la formation d'une forme d'équilibre dont la surface de séparation avec le milieu
extérieur, constituée par une surface gauche de
rayon de courbure R sensiblement uniforme selon une section droite, forme le fil de l'instrument. Dans le cas d'une lame, la surface gauche
est constituée par une surface hémicylindrique,
dans le cas d'une aiguille cylindrique la surface
gauche constituant le fil acéré est constitué par
une calotte sphérique de rayon de courbure
R. Afin d'obtenir conjointement la vitrification
des zones sous-jacentes au fil selon une dimension $\omega o$ suivant une génératrice de la paroi de
l'instrument et sur une épaisseur Zs, le spot de
focalisation du faisceau laser à un diamètre
$D = 2\omega o$ et le rayonnement laser est émis avec
une puissance lumineuse

$$Pa = \frac{1}{R\left(1 - \sin\frac{\alpha}{2}\right)} \pi \omega o^2 K (Tv - Ts) \qquad (I)$$

dans laquelle la puissance lumineuse Pa est exprimée en Watts, $\omega o$, R, Zs sont exprimés en centimètres et où K représente le coefficient de conductibilité thermique du matériau constituant l'instrument exprimé en W/cm $\times$ °C.

Tv et Ts représent respectivement la température de vaporisation et la température du fusion du matériau constituant l'instrument exprimées en degrès centigrades.

Corrélativement, le déplacement relatif du spot du faisceau laser est effectué à une vitesse linéaire $Vs = \frac{2\omega o}{T}$

où T représente pour chaque point de l'arête à traiter la durée de l'influence du faisceau laser.

$$Vs = \frac{8 \, \omega o \, H}{\pi \, R^2 \left(1 - \sin\frac{\alpha}{2}\right)^2} \left(\frac{Tv - Ts}{Tv + 273}\right)^2 \qquad (II)$$

$$\text{avec } T = \frac{\pi R^2}{4H}\left(1 - \sin\frac{\alpha}{2}\right)^2 \left(\frac{Tv + 273}{Tv - Ts}\right)^2$$

où H représente le coefficient de diffusivité thermique du matériau constituant l'instrument exprimé en centimètre carré par seconde.

Le procédé selon l'invention permet la formation d'une surface unique uniforme formée par la surface gauche constituant le fil de l'instrument et par la bande de matériau vitrifié, chaque paroi étant soumise successivement à l'impact du faisceau laser, la surface unique uniforme constituant pour l'instrument une zone de coupe ou tranchant de rugosité typiquement voisine de 1 μm en émission continue par exemple.

Les figures 2c à 2g sont relatives à différents exemples de mises en œuvre du procédé selon l'invention compte tenu des paramètres d'émission laser.

Selon la figure 2c, le rayonnement laser est émis en continu avec une puissance lumineuse Pa déterminée selon (I). Pour un instrument d'acier d'angle d'aiguisage $\alpha = 15°$, de longueur d'arête L=1 cm et, de rayon de courbure R = 1 μm désirés, la densité de puissance du spot de focalisation $Ia = \frac{Pa}{\pi \omega o^2}$ est de 1,4 $10^7$ W/cm, la puissance lumineuse Pa=100 W et la vitesse Vs=100 m/s. La durée de traitement $\tau = \frac{L}{Vs} = 0,1$ ms. Conformément à la figure 2d, l'émission laser continue est modulée par impulsions à une fréquence de modulation de l'ordre de 300 kHz. La puissance d'impulsion est de l'ordre de Pa=100 W, chaque impulsion a une durée de l'ordre de 0,3 μs et une énergie de l'ordre de 30 μJ. La puissance moyenne rayonnée est environ 9 W et la vitesse de déplacement relatif du spot de focalisation est environ 9 m/s.

Selon une variante des paramètres d'émission laser représentée figure 2e, l'émission laser est une émission pulsée de puissance lumineuse Pa par exemple égale à 100 Watts. Chaque impulsion laser a une durée $\tau$ sensiblement égale au rapport $\tau \frac{L}{Vs}$ de la longueur totale L du fil de l'instrument à la vitesse linéaire Vs de déplacement du spot de focalisation sur ce fil. L'énergie de chaque impulsion est égale au produit Pa $\times$ $\tau$.

Chaque impulsion laser peut, ainsi que représenté figure 2f, être également modulée à une fréquence de modulation voisine de 300 kHz comme déjà représenté figure 2d.

Selon une variante adaptée au traitement d'instruments acérés du type aiguille, représentée figure 2g, l'émission laser consiste en une impulsion de puissance crête Pa déterminée selon (I) et de durée

$$\tau = \frac{\pi R^2}{4H}\left(1 - \sin\frac{\alpha}{2}\right)^2 \left(\frac{Tv + 273}{Tv - Ts}\right)^2 \qquad (III)$$

l'énergie résultante Ea est égale au produit Pa $\times$ $\tau$. Pour l'exemple d'une aiguille d'acier d'angle $\alpha = 15°$, pour un rayon de courbure R = 1 μm et pour une largeur de traitement $\omega o = 15$ μm désirés, la densité de puissance Ia = 1,4 $10^7$ W/cm² et la puissance Pa = 100 W, la durée de l'impulsion $\tau = 0,3$ μs. Le spot de focalisation est maintenu sur la pointe de l'aiguille pendant toute la durée de l'impulsion.

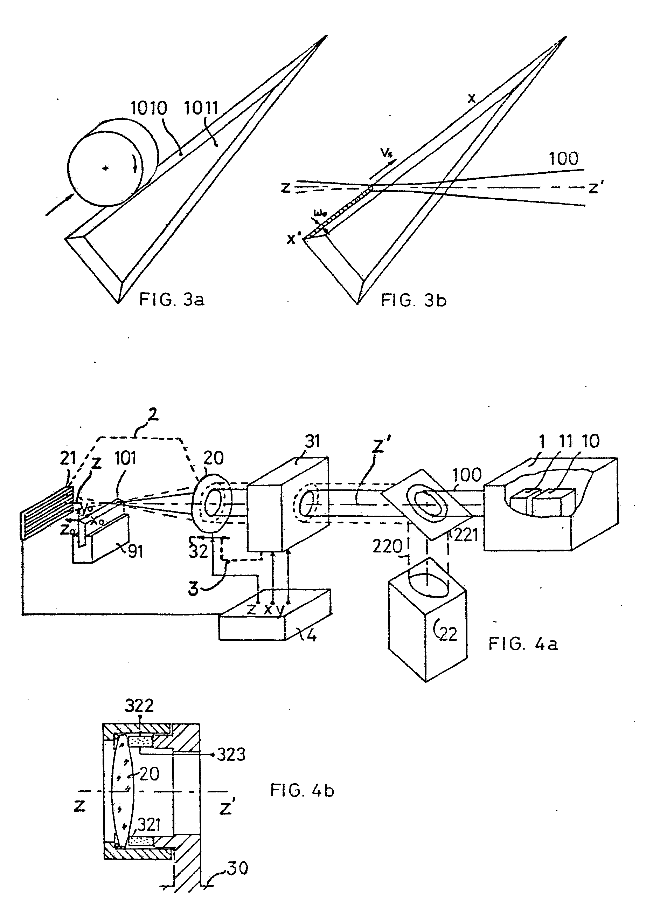

Le procédé selon l'invention permet le traitement des instruments acérés constitués par des matériaux non métalliques ou métalliques. Ce procédé est bien adapté à la fabrication de lames de rasoir, d'instruments de chirurgie acérés tels que bistouris, aiguilles de chirurgie cardiovasculaire, aiguilles de microchirurgie ophtalmique, aiguilles ou instruments de chirurgie dentaire. Conformément au procédé selon l'invention, la fabrication d'un instrument de chirurgie acéré consiste, à partir d'une tige d'acier spécial tel que, notamment, acier 455, 302, 304 et 420 présentant de bonnes caractéristiques mécaniques et thermiques pour la fusion par laser, à meuler la tige d'acier pour former un solide polyédrique comportant une pluralité de faces. Sur la figure 3a, l'intersection deux à deux de ces faces 1010, 1011 forme une arête vive d'angle d'aiguisage $\alpha$ déterminé selon une ligne continue, plane et de courbure déterminée. L'ensemble des arêtes vives du solide polyédrique constitue, après affûtage, le fil de l'instrument. Typiquement le fil de tels instruments comporte des ébarbures pouvant atteindre 15 à 20 μm. Ces ébavures ne peuvent être facilement réduites par les procédés précités, les différents traitements utilisés à ce jour ne permettant qu'une réduction imparfaite jusqu'à 7 à 8 μm tout en provoquant le plus souvent un traitement global de la pièce ou de l'instrument qui a pour effet de rendre l'ensemble de celui-ci cassant. Les risques de rupture de l'instrument de chirugie classique du type aiguille ne sont donc pas négligeables.

Conformément à l'invention, l'ensemble du solide polyédrique est soumis à un traitement de surface doux permettant un polissage fin de l'ensemble des faces du solide polyédrique. Typiquement le traitement de surface est constitué par und polissage anodique.

Un faisceau de rayonnement laser 100 de densité de puissance la comprise entre $10^6$ et $10^8$ W/$cm^2$ est ensuite focalisé sur au moins un point des arêtes vives du solide polyédrique. L'axe du faisceau laser d'intensité maximale et la tangente à la courbe de l'arête vive sont sensiblement concourants. Le spot de focalisation est ensuite déplacé sur la totalité du fil de l'instrument, l'axe du faisceau laser et la tangente à la courbe étant sensiblement maintenus concourants au cours du déplacement pour entrainer la fusion du mofil dans la zone centrale du faisceau laser et une fusion des zones superficielles sous-jacentes du fil. Le faisceau laser est focalisé selon un spot de diamètre 2 $\omega o$ permettant une vitrification d'une zone superficielle du matériau de l'instrument de dimension $\omega o$ suivant une direction parallèle à une génératrice G de la paroi de l'instrument et d'épaisseur Zs selon une deuxième direction perpendiculaire à cette première direction. Le faisceau laser entraîne la fusion du morfil et la formation d'un fil de coupe constitué par une surface gauche de rayon de courbure, selon une section droite, égal à

$$R = Zs \; \frac{1}{1 - \sin \dfrac{\alpha}{2}},$$

ce rayonnement laser étant émis avec une puissance lumineuse donnée selon la relation (I) précédemment décrite. Conjointement, le déplacement du spot de focalisation est effectué à une vitesse linéaire Vs donnée par la relation (II) précédente.

De préférence, l'émission laser est effectuée en mode TEMoo, l'intensité du rayonnement en fonction de la distance à l'axe du faisceau étant sensiblement répartie selon une courbe de Gauß.

Cette distribution permet avantageusement une volatilisation des ébavures et la fusion des zones sous-jacentes aux arêtes vives.

La figure 4a est relative à un mode de réalisation non limitatif d'un dispositif permettant la mise en œuvre du procédé selon l'invention. Selon la figure 4a, ce dispositif comprend des moyens 1 d'engendrer le faisceau de rayonnement laser 100. Ces moyens 1 comportent par exemple une tête d'émission laser 10 émettant un faisceau 100 de densité de puissance moyenne Pa (relation I). La tête d'émission laser 10 peut être une tête 'émission laser continue et comporte par exemple un laser à gaz $CO_2$, ou à argon ou un laser à corps solide Nd. YAG. Les moyens d'engendrer le rayonnement laser comportent en outre, selon une première variante de réalisation représentée figure 4a, des moyens de modulation 11 de l'émission laser par impulsions à une fréquence voisine de 300 kHz. Chaque impulsion a une durée de l'ordre de 0,3 µs. La puissance et l'énergie des impulsions sont déterminées d'après des relations (I) et (III), l'énergie Ea = Pa × $\tau$. Pour une description plus détaillée de ce type de têtes d'émission on pourra se reporter notamment à la demande de brevet US 4 150 343 au nom de la demanderesse. Selon une autre variante de réalisation la tête d'émission laser 10 permet une émission laser pulsée de puissance Pa. Chaque impulsion laser a une durée $\tau$ sensiblement égale au rapport $\tau = \dfrac{L}{Vs}$ de la longueur du fil de l'instrument à traiter à la vitesse linéaire Vs de déplacement du spot de focalisation sur ce fil. L'énergie de chaque impulsion est typiquement égale au produit Pa × $\tau$. Les moyens de modulation 11 permettent éventuellement également une modulation des impulsions laser à une fréquence de modulation voisine de 300 kHz. Selon une variante non limitative du dispositif permettant le traitement d'un instrument acéré du type aiguille de section circulaire, la tête d'émission laser pulsée permet d'engendrer de simples impulsions d'énergie et de durée déterminées d'après les paramètres exigés R et $\omega o$. Selon une variante préférentielle du dispositif selon l'invention, la tête d'émission laser émet un faisceau de rayonnement laser en mode TEMoo. La répartition d'intensité du faisceau en fonction de la distance à l'axe de ce dernier est sensiblement distribuée selon une courbe de Gauß et permet une vitrification des zones superficielles sous-jacentes au fil selon une épaisseur Zs régulièrement décroissante en fonction de la distance au fil de l'instrument. Pour une description plus détaillée de ces têtes d'émissions en particulier de têtes d'émission comprenant un laser à corps solide Nd YAG on se reportera à la demande de brevet US-A-4 039 823 au nom de la demanderesse.

Le dispositif selon l'invention représenté figure 4a comporte en outre des moyens de focalisation 2 du faisceau laser sur les arêtes, arêtes vives ou gorges de la pièce mécanique 101. Sur la figure 4a, les moyens de focalisation 2 sont représentés par un trait mixte référencé 2 lien fonctionnel entre une lentille convergente 20 assurant la focalisation effective du faisceau laser 100 et un détecteur 21 disposé dans l'axe du faisceau et permettant le contrôle de la focalisation effective du spot de focalisation sur l'arête à traiter dans les conditions précédemment décrites. La longueur focale F de cette lentille est donné par (IV): $F = \dfrac{\omega o}{\theta}$ selon les exigences du diamètre du spot de focalisation où $\theta$ est la divergence du faisceau, $\theta$ est de l'ordre de 0,2 à 2 $10^{-3}$ pour un laser YAG et de 0,8 à 8 $10^{-3}$ pour un laser $CO_2$. Selon la figure 4a, le détecteur 21 est placé en aval du spot de focalisation du faisceau laser sur l'axe de ce faisceau et délivre, pour une focalisation convenable du spot sur l'arête, un signal de référence représentatif de la coïncidence en intersection de l'axe ZZ' du faisceau laser et de la tangente à la courbe de l'arête.

Le dispositif représenté figure 4a comporte en outre des moyens pour assurer un déplacement relatif sur les arêtes de la pièce mécanique du spot de focalisation à vitesse déterminée.

Sur la figure 4a, les moyens pour assurer le déplacement relatif du spot et des arêtes ont été représentés par un trait mixte 3 qui représente le lien fonctionnel entre une cellule de déflexion 31 en x, y du faisceau laser, les directions x et y étant représentées sur la figure 4a comme les directions parallèles à la tangente à l'arête de l'instrument 101 et la perpendiculaire à cette direction respectivement, et des moyens de déplacement 32 selon la direction 2 parallèle à l'axe ZZ' du faisceau laser. Les directions x, y, z forment un trièdre de référence. Ces moyens de déplacement 32 sont représentés figure 4a par une double flèche et sont constitués par exemple par tout moyen d'entraînement et de déplacement en translation dans la direction z de la lentille de focalisation 20 constituée par une lentille du type »zoom«, montée sur un chariot mobile dans cette direction et entraînée par un moteur d'entraînement. La cellule de déflexion 20 en x, y est à titre d'exemple non limitatif constituée par une cellulose de déflexion électro-optique ou par un jeu de miroirs du type miroirs de galvanomètre. Les moyens de déflexion du faisceau laser ainsi décrits de manière non limitative permettent le déplacement du spot de focalisation sur la totalité du fil se l'instrument à une vitesse de déplacement déterminée.

Le dispositif comporte également des moyens 4 de commande du déplacement du spot de focalisation selon une loi de déplacement prédéterminée correspondant à la loi de courbure de la partie acérée de l'instrument. Selon la figure 4a, l'instrument 101 est placé sur un support porte-instrument 91. Il est à noter que la quasi totalité des instruments acérés, tels que les instruments de chirurgie, obtenus par meulage d'une tige métallique présentent des arêtes vives constituées par des courbes continues planes. L'orientation de chaque arête à traiter selon un plan x, y confondu avec le plan focal de la lentille de focalisation 20 est donc effectuée par la seule orientation du support porte-instrument. Dans ce cas, le déplacement du spot de focalisation se réduit à un déplacement dans le plan de focalisation, plan x, y, la lentille 20 étant choisie de préférence avec une grande focale, de l'ordre de 10 cm, de manière que compte tenu des dimensions réduites des objets à traiter la focalisation du faisceau soit effectuée sans aberration dans les conditions de Gauß. Dans le cas de l'ébavurage d'instruments acérés quelconques, les moyens de déflexion du faisceau laser assurent cependant la focalisation de ce dernier sur la courbe gauche constituant l'arête à traiter. Un cas particulier concerne les pièces mécaniques telles que des forets d'alésage ou tarauds présentant une symétrie axiale de révolution à laquelle est superposée une configuration périodique spatialement constituée par l'arête de forage ou d'alésage. Dans ce cas, le spot de focalisation du faisceau laser est maintenu focalisé en un point de la configuration périodique à traiter, un mouvement hélicoïdal étant sensiblement imprimé à la pièce par l'intermédiaire du support porte-pièce 91 constitué par exemple par un tour à chariot mobile en x. Dans le cas où ces pièces à géométrie particulière ont une section droite variable, la déflexion du faisceau laser se réduit à une déflexion plane (x, y) selon la courbe plane formée par l'intersection de la surface latérale de la pièce et d'un plan axial tel que le plan focal (x, y) de la lentille.

Ainsi que représenté figure 4a, les moyens de focalisation du faisceau laser comportent en outre un dispositif de visée de l'arête ou de la partie acérée de l'instrument comprenant un dispositif d'alignement auxiliaire 22 émettant un faisceau d'alignement 220 et un miroir semi-transparent 221 permettant la transmission du faisceau laser de traitement 100 et du faisceau d'alignement 220, les deux faisceaux ayant en aval du miroir 221 leurs axes confondus et des chemins optiques identiques. Le miroir semi-transparent est placé entre la cellule de déflexion 31 et les moyens d'émission 1, la cellule de déflexion 31 et la lentille de focalisation 20 assurant respectivement la transmission et la focalisation des faisceaux laser et faisceau d'alignement sensiblement à l'identique. De préférence, le dispositif d'alignement auxiliaire 22 est constitué par un laser He Ne émettant un faisceau 220 de diamètre plus grand que celui du faisceau laser 100 afin d'assurer un recouvrement complet du spot de focalisation du faisceau laser 100 par le spot du faisceau d'alignement.

Après focalisation du spot en un point de l'arête $x_0$, $y_0$, $z_0$ déterminé par le dispositif de visée, les moyens de commande 4 permettent de délivrer, aux moyens de déflexion 3 et principalement à la cellule de déflexion 31 et aux moyens de déplacement 32 du spot de focalisation selon la direction z, des signaux $x(t)$, $y(t)$, $z(t)$ de déplacement du spot selon la loi de courbure $f(x, y, z)$ par rapport à un référentiel fixe $(x_0, y_0, z_0)$ de l'arête de la pièce à traiter. Bien entendu les signaux $x(t)$, $y(t)$, $z(t)$ sont déterminés pour un type de pièce à traiter compte tenu des paramètres de positionnement initial de l'instrument ou pièce 101 sur le support porte-instrument 91.

Tout mode de réalisation dans lequel d'une part l'ensemble des signaux $x(t)$, $y(t)$, $z(t)$ ou d'autre part une partie seulement de ces signaux, par exemple, les signaux $x(t)$, $y(t)$ sont délivrés à un moteur d'entraînement du support porte-instrument 91, le signal $z(t)$ étant maintenu constant ou simplement supprimé, ne sort pas du cadre de la présente invention ainsi que décrit précédemment.

Le fonctionnement global de l'appareil représenté figure 4a est le suivant: le faisceau d'alignement 220 permet le réglage du point de focalisation de la lentille de focalisation 20 selon le système de coordonnées $x_0$, $y_0$, $z_0$ et consécutivement du faisceau laser de traitement 100. La détection du point de focalisation est effectuée par le détecteur 21 qui délivre lors de la focalisation convenable du faisceau d'alignement, donc du faisceau laser de traitement, un signal de référence aux moyens de commande 4. Le signal de référence agit par exemple par l'intermédiaire des moyens de commande 4 sur la cellule de déflexion 31 et plus précisément au niveau de la déflexion en y de manière à provoquer en $x_0$, $y_0$, $z_0$ à l'origine la coïncidence, en intersection, de l'axe ZZ' du faisceau. Après stabilisation du système, la constante de temps du système peut être choisie très inférieure au $\frac{1}{1000}$ de secondes, les moyens de commande 4 délivrent selon une séquence déterminée pour un type d'instrument ou de pièce les signaux x (t), y (t), z (t) aux moyens de déflexion 3 entraînant le déplacement du point de focalisation des spots des faisceaux d'alignement 220 et du faisceau de traitement 100 selon la loi de courbure de l'arête de l'instrument 101. Pour des profils d'instrument complexes plusieurs séquences de traitement peuvent être nécessaires. En tout état de cause, l'appareil selon l'invention permet le traitement d'un nombre de pièces du type aiguille chirurgicale pouvant atteindre 150 pièces à la minute.

Selon un détail préférentiel de réalisation de l'invention représenté figure 4b, les moyens de déplacement 32 selon la direction 3 du spot de focalisation du faisceau laser sont constitués par un anneau de quartz piézo-électrique 321 solidaire du châssis ou banc optique 30 du dispositif. L'anneau de quartz piézo-électrique 321 sert de support à la lentille 20 tous deux ayant leurs axes confondus avec l'axe ZZ' du faisceau laser 100. L'anneau de quartz piézo-électrique 321 comporte des électrodes 322 et 323 sur lesquelles peut être appliquée une tension de commande. Une tension continue de commande sur les électrodes 321, 322 permet d'obtenir un déplacement proportionel selon la direction ZZ' de la lentille 20 et du point de focalisation. Ce dispositif permet soit la commande de déplacement du spot de focalisation selon la direction ZZ' pour des déplacements faibles de l'ordre de quelques centièmes de millimètres soit l'asservissement de la focalisation du spot selon la direction z par contrôle des défauts de focalisation par le détecteur 21 selon cette direction.

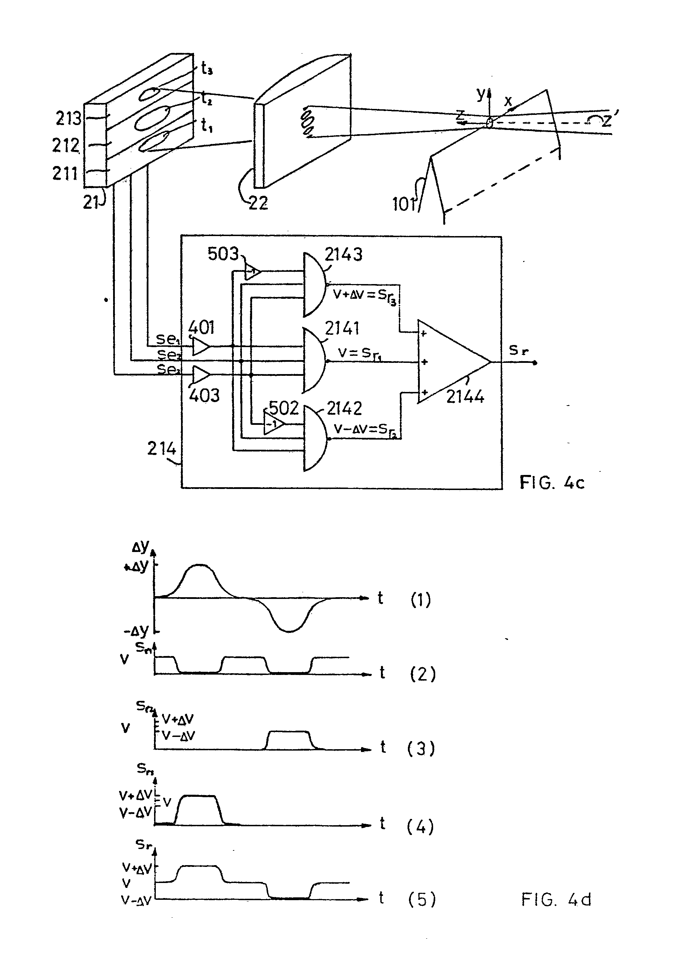

Selon un autre détail préférentiel de réalisation de l'invention représenté figure 4c, le détecteur 21 est constitué selon une direction parallèle à la direction y, par un réseau de photodiodes 211, 212, 213. Le détecteur comprend par exemple au moins trois photodiodes de manière non limitative. Chaque photodiode délivre respectivement pour chaque tache de diffraction $t_1$, $t_2$, $t_3$ du faisceau d'alignement ou/et du faisceau laser de traitement délivrée par l'arête de l'instrument à traiter un signal élémentaire $Se_1$, $Se_2$, $Se_3$ d'amplitude déterminée pour une focalisation convenable du spot du faisceau laser. L'ensemble des signaux élémentaires permet de constituer le signal de référence Sr. A cet effet un circuit logique 214 délivre le signal de référence Sr en présence de l'ensemble des signaux élémentaires $Se_1$, $Se_2$, $Se_3$, donc des taches de diffraction sur les photodiodes 211, 212, 213. A titre d'exemple non limitatif, le circuit logique 214 comporte au moins trois portes 2141, 2142, 2143 logiques ET recevant chacune les signaux élémentaires $Se_1$, $Se_2$, $Se_3$. L'une de ces portes ET, la porte 2141 par exemple reçoit les signaux $Se_1$ et $Se_3$ par l'intermédiaire d'un comparateur à seuil maxima 401 et par l'intermédiaire d'un comparateur à seuil minima 403, le signal $Se_2$ étant délivré directement à la porte 2141. La porte 2142 reçoit le signal délivré par le comparateur à seuil minima 403 par l'intermédiaire d'un inverseur logique 502, le signal $Se_2$ et le signal délivré par le comparateur à seuil maxima 401. La porte ET 2143 reçoit le signal $Se_2$ et le signal délivré par le comparateur à seuil maxima 401. La porte Et 2143 reçoit le signal $Se_2$, le signal délivré par le comparateur à seuil maxima 401 par l'intermédiaire d'un inverseur logique 503 et le signal délivré par le comparateur à seuil minima 403. Les portes ET 2141, 2142 et 2143 ont leur sortie reliée à l'entrée d'un amplificateur sommateur 2144.

Le fonctionnement du dispositif représenté figure 4c est le suivant: En présence d'une focalisation convenable du spot du faisceau laser, c'est-à-dire lors de l'intersection de la tangente x au fil de l'instrument et de l'axe ZZ' du faisceau, les taches de diffraction $t_1$, $t_2$, $t_3$, d'intensité $I_1$, $I_2$, $I_3$ coïncident exactement avec les diodes 211, 212 et 213 qui délivrent respectivement un signal $Se_1$, $Se_2$, $Se_3$. Les seuils du comparateur à maxima 401 et du comparateur à minima 403 sont tels que les signaux délivrés par ces comparateurs en présence des signaux $Se_1$ et $Se_3$ ont un niveau logique 1, l'amplitude du signal $Se_2$ pouvant être pris par exemple comme niveau logique 1 de référence. La porte ET 2141 délivre un signal logique de niveau logique 1,

$$\widehat{Sr_1} = \widehat{Se_1} \times \widehat{Se_2} \times \widehat{Se_3}.$$

Ce signal $Sr_1$ de niveau logique 1 a typiquement une amplitude $Sr_1 = V$ donnée représentative de la focalisation convenable du faisceau. Les portes 2142 et 2143 sont alors alimentées par le signal $\widehat{Se_2}$ de niveau logique 1 et par les inverseurs logiques 502 et 503 respectivement constitués par exemple par des bascules bistables, lesquelles délivrent aux deux portes précitées des signaux logiques de niveau 0. Les portes 2142 et 2143 délivrent un signal logique

$$\widehat{Sr_2} = \widehat{Se_1} \times \widehat{Se_2} \times \overline{\widehat{Se_3}} \text{ et } \widehat{Sr_3} = \overline{\widehat{Se_1}} \times \widehat{Se_2} \times \widehat{Se_3}$$

de niveau logique 0. De préférence l'amplitude du signal de niveau logique 0 délivré par les portes 2142 et 2143 peut être choisi égal à la tension de référence du dispositif par tout circuit de correction bien connu de l'homme de l'art et qui par conséquent ne sera pas décrit ici. L'amplificateur sommateur 2144 délivre lors de la focalisation convenable du spot le signal d'amplitude $Sr = Sr_1 = V$.

Lors d'une focalisation défectueuse du spot, par exemple vers les y négatifs, une défocalisation $- \Delta y$ du spot a pour conséquence la délivrance par la photodiode 213 d'un signal d'amplitude $Se_3 - \Delta s$ inférieure au seuil du comparateur à minima 403, lequel, déclenché, délivre un signal $\widehat{Se}_3$ de niveau logique 0. L'amplitude du signal $Se_1$ reste cependant suffisante pour ne pas entraîner le déclenchement du comparateur à maxima 401, ce comparateur délivrant dans ce cas le signal logique $\widehat{Se}_1$. Les portes ET 2141 et 2143 recevant ce signal délivrent un signal logique.

$$\widehat{Sr}_1 = \widehat{Se}_1 \times \widehat{Se}_2 \times \overline{\widehat{Se}_3} \text{ et } \widehat{Sr}_2 = \widehat{Se}_1 \times \widehat{Se}_2 \times \overline{\widehat{Se}_3}$$

de niveau logique 0 quelle que soit l'amplitude plus faible du signal $Se_1$. La porte ET 2142 recevent le signal $Se_3$ rétabli par l'inverseur logique 502 délivre un signal logique

$$\widehat{Sr}_2 = \widehat{Se}_1 \times \widehat{Se}_2 \times \widehat{Se}_3$$

de niveau logique 1. L'amplitude de ce signal logique délivré par la porte 2142 peut être choisie par exemple égal à $Sr_2 = V - \Delta N$ où $\Delta N$ représente l'incrément de résolution $\Delta y$ limite acceptable pour le spot de focalisation, l'amplificateur sommateur 2144 délivrant un signal d'amplitude $Sr = Sr_2 = V - \Delta N$. Dans le cas d'une focalisation défectueuse du spot du faisceau vers les y positifs, une défocalisation $+ \Delta y$ du spot pour conséquence la délivrance par la photodiode 211 d'un signal $Se_1 + \Delta s$ supérieur au seuil du comparateur à maxima 401 lequel déclenché délivre un signal $\widehat{Se}_1$ de niveau logique 0. L'amplitude du signal $Se_3$, plus grande, n'entraîne pas le déclenchement du comparateur à minima 403, lequel délivre le signal $\widehat{Se}_3$. La porte ET 2143 recevant le signal logique $\widehat{Se}_1$ rétabli par l'inverseur logique 503 délivre un signal logique

$$Sr_2 = Se_1 \times Se_2 \times Se_3$$

de niveau logique 1. L'amplitude de ce signal logique délivré par la porte 2143 peut être choisi par exemple égale à $Sr_3 = V + + \Delta N$ où $\Delta N$ représente l'incrément de résolution $\Delta y$ limite acceptable pour le spot de focalisation. L'amplificateur sommateur 2144 délivre un signal d'amplitude $Sr_3 = V + \Delta N$, les portes 2141 et 2142 délivrant un signal logique S 21 et S 22 respectivement de niveau logique 0 pour lesquels l'amplitude a été choisie nulle ainsi que décrit précédemment.

Les différents signaux délivrés ci-après pour une défocalisation $\pm \Delta y$ sont représentés figures 4d1 à 4d5 ainsi que décrit précédemment. Un tel système de détection permet notamment de s'affranchir au maximum de la résolution spatiale du réseau de photodiodes suivant la direction y, l'incrément de résolution de la chaîne de détection $\Delta N$ pouvant être rendu minimal comptetenu du gain de boule de la chaîne, qui peut être choisi arbitrairement grand.

De préférence le détecteur 21 a selon la direction x une dimension sensiblement identique à celle de l'instrument à traiter. Pour les instruments de grande dimension selon cette direction, de l'ordre de la moitié de la distance focale de la lentille convergente 20, une lentille convergente hémicylindrique 22 permet la focalisation des taches de diffraction sur le détecteur quelle que soit la position du spot du faisceau laser au cours de son déplacement. Tout mode de réalisation dans lequel le réseau de diodes est remplacé par un tube vidicon ne sort pas du cadre de la présente invention.

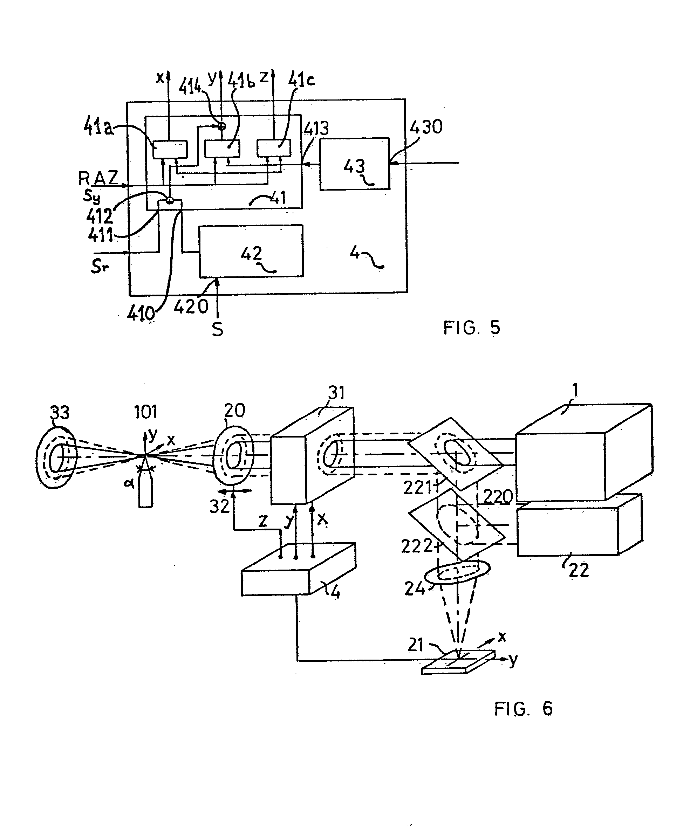

Selon un détail de réalisation représenté figure 5, les moyens de commande 4 de déplacement du spot de focalisation comportent un générateur de fonction 41 délivrant sur les entrées de commande de déviation en x et en y de la cellule de déflexion 31 respectivement un signal x (t) et y (t) et à l'entrée de commande du système 32 de déplacement en Z de la lentille de focalisation 20 un signal z (t). Les signaux x (t), y (t), z (t) sont en coordonnées paramétriques fonctions du temps représentatifs à chaque instant, pour une séquence relative à un instrument, de la loi de courbure de l'arête ou partie acérée de l'instrument. Le générateur de fonction est par exemple constitué par trois générateurs de fonctions analogiques 41a, 41b, 41c, synchronisés par un signal Sy délivrant respectivement les signaux x (t), y (t), z (t) pour une séquence de traitement. Un circuit de prépositionnement automatique du spot de focalisation 42 délivres au générateur de fonction 41 sur une première entrée 410, dite de commande, un signal de prépositionnement du spot de focalisation. Le générateur de fonction 41 reçoit sur une deuxième entrée 411, dite de correction, le signal de référence Sr délivré par le détecteur de rayonnement laser, principalement par le circuit logique 214. Le signal de prépositionnement a par exemple une amplitude égale à V et la différence entre l'amplitude du signal de référence $V \pm \Delta N$ et l'amplitude du signal de prépositionnement effectuée par un sommateur 412 est par exemple additionnée en 414 au signal délivré par le générateur de fonction analogique appliqué aux entrées de commande de déflexion suivant la direction y. La focalisation du spot du faisceau laser selon la direction y est ainsi asservie à la courbure de l'arête de l'instrument à traiter par la chaîne de détection constituée par le détecteur 21, le circuit logique 214, le circuit de commande 4 et la cellule de déflexion 31.

Selon un mode préférentiel de réalisation de l'invention représenté figure 5, les moyens de commande 4 comportent en outre un circuit 43 de commande auxiliaire de la vitesse de déplacement du spot de focalisation. Le circuit de commande auxiliaire 43 délivre au générateur de fonction 41 sur une troisième entrée 413 un signal ajustable par l'opérateur, signal de la forme $\sqrt{x'^2+y'^2+z'^2} = Q$; (IV) où Q est sensiblement égal à Vs vitesse linéaire de déplacement du spot sur l'arête et dans lequel x', y', z' représentent les dérivées premières par rapport au temps

$$\frac{dx}{dt}, \quad \frac{dy}{dt}, \quad \frac{dz}{dt}$$

de signaux x (t), y (t), z (t).

A titre d'exemple non limitatif chaque générateur de fonction analogique reçoit respectivement le signal x', y', z' le circuit de commande auxiliaire imposant la relation (IV) précitée.Dans ce cas, les générateurs de fonction analogiques précités sont constitués par des intégrateurs munis d'une remise à zéro commune permettant leur synchronisation Sy, le circuit de commande auxiliaire consistant par exemple en un calculateur programmable et un convertisseur numérique analogique. Ces dispositifs ne seront pas décrits car bien connus de l'homme de l'art.

La figure 6a est relative à une variante de réalisation du dispositif selon l'invention tel que représenté figure 4. Dans la figure 6a, les mêmes références représentent les mêmes éléments que dans la figure 4. Suivant la figure 6a, les moyens de focalisation 3 comportent en outre un miroir sphérique 33 de réflexion du faisceau laser de traitement 100 et du faisceau laser d'alignement 221. Le miroir sphérique permet la transmission en sens opposé selon un chemin optique identique des faisceaux laser réfléchis au travers de la cellule de déflexion 31.

Une lentille de focalisation auxiliaire 24 permet la focalisation du faisceau laser réfléchi sur le détecteur 21 par l'intermédiaire d'au moins un miroir semi-transparent, le miroir 221. Un deuxième miroir semi-transparent 222 permet successivement la transmission vers la cellule de déflexion 31 et vers la lentille de focalisation du faisceau d'alignement.

Le dispositif représenté figure 6 fonctionne de manière analogue à celui décrit figure 4. Le choix d'un miroir sphérique 33 de grand diamètre d'ouverture et de distance focale comparable à celle de la lentille 20, c'est à dire environ la dimension maximale de l'instrument à traiter, permet un traitement de cet objet de manière analogue au traitement mis en œuvre par le dispositif selon la figure 4.

Le dispositif selon la figure 6 est cependant particulièrement bien adapté pour le traitement des pointes acérées des aiguilles de section circulaire et des arêtes vives le traitement thermique étant symétrique à l'arête. L'avantage du dispositif de la figure 6a est la simplicité de détecteur de positionnement, le spot de focalisation du rayon réfléchi restant fixe sur le détecteur 21.

Tout mode de réalisation différent dans lequel le détecteur est placé hors de l'axe du faisceau laser incident et agissant par réflexion, par exemple, ne sort pas du cadre de la présente invention.

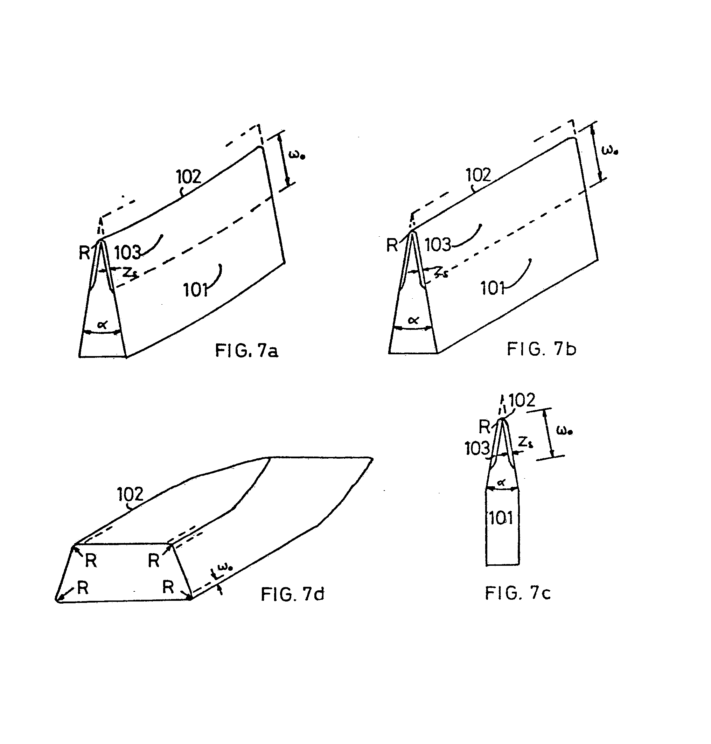

Les figures 7a à 7c sont relatives à différents types d'instruments obtenus par la mise en œuvre du procédé selon l'invention. Suivant la figure 7a, un instrument acéré 101 d'angle d'aiguisage $\alpha$ déterminé soumis au traitement selon l'invention comporte un fil de coupe 102 constitué par une surface gauche de rayon de courbure R, dans une section droite, sensiblement uniforme. La zone sous-jacente du fil 103 comporte sur la paroi de l'instrument une bande de matériau vitrifié de dimension $\omega o$ suivant une première direction parallèle à une génératrice G de la paroi de l'instrument. La bande de matériau vitrifié a une épaisseur Zs selon une deuxième direction perpendiculaire à cette première direction. Le rayon de courbure R de la surface gauche constituant le fil est de la forme

$$R = Zs \frac{1}{1-\sin\frac{\alpha}{2}}.$$

La bande de matériau vitrifié et la surface gauche constituant le fil constituent une surface continue uniforme présentant une rugosité, ou grain, voisine de 1 µm.

De tels instruments présentent donc un tranchant constitué par le fil et par la zone vitrifiée exempt de toute ébarbure. Le tranchant est constitué du fait du phénomène analogue à la trempe précédemment décrit, par un matériau de dureté environ trois fois supérieure à la dureté du matériau constituant l'instrument et non soumis au traitement laser.

Ainsi que représenté figure 7b, dans le cas d'un instrument du type lame à fil rectiligne,le fil en tant que tel est constitué par une surface hémi-cylindrique. La section droite du fil est constituée par un rayon R de courbure

$$R = Zs \frac{1}{1-\sin\frac{\alpha}{2}}.$$

Selon une variante de réalisation représentée figure 7c, l'instrument étant constitué par une aiguille de section 104 sensiblement circulaire et la pointe l'aiguille étant constituée sensiblement par un cône d'angle d'ouverture sensiblement égal à l'angle d'aiguisage $\alpha$ de l'instrument, le fil de coupe 102 de l'instrument constitué par la pointe de l'aiguille est constitué par une calotte sphérique de rayon de courbure

$$R = Zs \frac{1}{1-\sin\frac{\alpha}{2}}.$$

La bande de matériau vitrifié 103 forme sensiblement un tronc de cône de dimension $\omega o$ suivant une direction parallèle à une génératrice G de la paroi de l'aiguille et d'épaisseur Zs suivant une direction perpendiculaire à cette direction.

La bande de matériau vitrifié et la calotte sphérique sont continûment reliées pour former une surface de rugosité voisine de 1 µm constituant la pointe acérée de l'aiguille.

Une autre variante de réalisation est représentée figure 7d dans le cas où l'instrument est constitué par une aiguille du type aiguille chirurgicale comportant une pluralité d'arêtes vives et une pointe aiguë constituant le fil de l'instrument. Les arêtes vives sont par exemple constituées par l'intersection deux à deux de surfaces planes ou gauches délimitant un polyèdre. Le fil de l'instrument est constituée d'une part au niveau des arêtes vives par une surface sensiblement hémi-cylindrique 102. La section droite du fil au niveau de ces arêtes est constituée par un demi-cercle de rayon R et au niveau de la pointe aiguë par une surface gauche de même rayon de courbure R uniforme de la forme

$$R = Zs \ \frac{1}{1-\sin\frac{\alpha}{2}}.$$

La zone sous-jacente du fil comporte sur la paroi de l'instrument, de part et d'autre du fil sur chaque surface concourante constituant une arête, une bande de matériau vitrifié de dimension $\omega$o suivant une première direction parallèle à une génératrice de la paroi ou des surfaces de l'instrument. La bande de matériau a une épaisseur Zs dans une direction perpendiculaire à cette première direction. Les bandes de matériau vitrifié et les surfaces constituant le fil forment une surface continue uniforme présentant une rugosité ou grain voisine de 1 µm et constituent le tranchant de l'instrument.

De telles aiguilles chirurgicales sont d'un intérêt d'utilisation très important dans le domaine de la micro-chirurgie ophtalmologique et de la chirurgie cardiovasculaire ou esthétique du fait que leur traitement local leur assure une précision de coupe incomparable sans toutefois augmenter le risque de rupture de ces aiguilles à un niveau comparable à celui des aiguilles qui ont subi, dans un but analogue, un traitement global tel que traitement thermique ou autre.

### Revendications

1. Procédé d'ébavurage d'un instrument acéré comportant une arête vive affûtée pour constituer le fil de l'instrument, caractérisé en ce qu'il consiste à

— émettre un faisceau de rayonnement laser (100) de densité de puissance comprise entre $10^6$ et $10^8$ W/cm$^2$,
— focaliser sur l'arête de l'instrument le faisceau laser (100) de manière que l'axe du faisceau laser et la tangente au fil de l'instrument soient sensiblement concourants, et
— déplacer le sport de defocalisation du faisceau laser (100) sur la totalité du fil de l'instrument acéré à une vitesse déterminée pour assurer la fusion du morfil dans la zone centrale du faisceau laser.

2. Procédé selon la revendication 1 pour obtenir, en outre, sur un instrument acéré comportant un angle d'aiguisage $\alpha$ déterminé, une vitrification d'une zone superficielle du matériau de l'instrument ayant une dimension $\omega$o suivant une première direction parallèle à une génératrice de la paroi de l'instrument et une épaisseur Zs déterminée selon une deuxième direction perpendiculaire à cette première direction, caractérisé en ce qu'il consiste à focaliser le faisceau de rayonnement laser (100) de manière que le spot de focalisation ait un diamètre $2\omega$, à émettre le rayonnement laser avec une puissance lumineuse Pa déterminée par l'équation

$$Pa = \frac{2\pi\ \omega o^2 K\ (Tv - Ts)}{R\left(1 - \sin\frac{\alpha}{2}\right)}$$

dans laquelle

— $R = \dfrac{Zs}{\left(1 - \sin\dfrac{\alpha}{2}\right)}.$

est le rayon de courbure de la surface gauche constituant le fil de coupe,
— K représente le coefficient de conductibilité thermique du matériau constituant l'instrument, et
— Tv et Ts représentent respectivement la température de vaporisation et la température de fusion du matériau constituant l'instrument exprimées en degrés centigrades,

et à déplacer le spot du faisceau laser (100) à une vitesse linéaire déterminée par l'équation

$$Vs = \frac{8\ \omega o\ H}{\pi R^2 \left(1 - \sin\frac{\alpha}{2}\right)^2}\ \left(\frac{Tv - Ts}{Tv + 273}\right)^2$$

dans laquelle H représente le coefficient de diffusivité thermique du matériau constituant l'instrument.

3. Procédé selon la revendication 2, caractérisé en ce que le faisceau laser (100) est émis en mode TEMoo, l'intensité du rayonnement étant distribuée en fonction de la distance à l'axe du faisceau selon une courbe de Gauß.

4. Procédé selon la revendication 2, caractérisé en ce que le faisceau laser (100) est émis en continu.

5. Procédé selon la revendication 4, caractérisé en ce que l'émission du faisceau laser (100) est modulée par des impulsions ayant une fréquence voisine de 300 kHz.

6. Procédé selon la revendication 2, caractérisé en ce qu'il consiste à émettre le faisceau de rayonnement laser (100) sous la forme d'une suite d'impulsions ayant chacune une durée $\tau$ sensiblement égale au rapport $\dfrac{L}{Vs}$ dans lequel L est la longueur totale du fil de l'instrument.

7. Procédé selon la revendication 6, caractérisé en ce que chaque impulsion laser est modulée à une fréquence de modulation voisine de 300 kHz.

8. Procédé selon la revendication 2 d'émorfilage d'un instrument acéré du type aiguille, caractérisé en ce qu'il consiste à émettre le faisceau laser (100) sous la forme d'une impulsion de puissance Pa et de durée

$$\tau = \frac{\pi R^2}{4H} \left(1 - \sin \frac{\alpha}{2}\right)^2 \left(\frac{Tv + 273}{Ts - Ts}\right)^2$$

le spot de focalisation du faisceau laser (100) étant maintenu focalisé sur la pointe de l'aiguille toute le durée de l'impulsion.

9. Procédé selon la revendication 8, caractérisé en ce que l'énergie de l'impulsion est comprise entre 0,03 mJ et 0,1 mJ et sa durée est comprise entre 0,3 μs et 10 μs.

10. Procédé de fabrication d'un instrument de chirurchie acéré à partir d'une tige d'acier spécial consistant à:

— meuler ladite tige pour former un solide polyédrique comportant au moins deux faces dont l'intersection forme une arête vive d'angle d'aiguisage $\alpha$ déterminé selon une ligne continue plane de courbure déterminée,
— soumettre l'ensemble du solide polyédrique à un traitement de surface permettant un polissage fin desdites faces,

caractérisé en ce qu'il consiste en outre à:

— focaliser sur au moins un point de l'arête vive un faisceau de rayonnement laser (100) selon un spot de focalisation de diamètre $2\omega o$, l'axe du faisceau laser (100) et la tangente à la courbe de ladite arête vive étant sensiblement concourants, et
— déplacer le spot de focalisation du faisceau laser (100) sur la totalité du fil de l'instrument, l'axe du faisceau laser (100) et la tangente à la courbe de ladite arête vive étant sensiblement maintenus concourants au cours du déplacement pour entraîner la fusion du morfil dans la zone centrale du faisceau laser, une vitrification d'une zone superficielle du matériau de l'instrument de dimension $\omega o$ suivant une première direction parallèle à une génératrice de la paroi de l'instrument et d'épaisseur Zs selon une deuxième direction perpendiculaire à cette première direction, et la formation d'un fil de coupe constitué par une surface gauche de rayon de courbure R déterminé, de la forme

$$R = \frac{Zs}{1 - \sin \frac{\alpha}{2}}$$

le rayonnement laser étant émis avec une puissance lumineuse

$$Pa = \frac{2\pi \omega o^2 K (Tv - Ts)}{R \left(1 - \sin \frac{\alpha}{2}\right)}$$

dans laquelle

— K représente le coefficient de conductibilité thermique du matériau constituant l'élément,
— Tv et Ts représentent respectivement la température de vaporisation et la température de fusion du matériau constituant l'instrument exprimées en dégrés centigrades, le déplacement du spot du faisceau laser étant effectué à une vitesse linéaire Vs de la forme

$$Vs = \frac{8 \omega o H}{\pi R^2 \left(1 - \sin \frac{\alpha}{2}\right)^2} \left(\frac{Tv - Ts}{Tv + 273}\right)^2$$

dans laquelle H représente le coefficient de diffusivité thermique du matériau constituant l'instrument.

11. Procédé selon la revendication 10, caractérisé en ce que l'émission laser est effectuée en mode TEMoo, l'intensité du rayonnement étant répartie selon une courbe de Gauß en fonction de la distance à l'axe du faisceau.

12. Dispositif d'ébavurage d'un instrument acéré comportant une arête vive affutée pour constituer le fil de l'instrument, caractérisé en ce qu'il comprend:

— des moyens (1) pour engendrer un rayonnement laser (100) de densité de puissance comprise entre $10^6$ et $10^8$ W/cm$^2$,
— des moyens (2) pour focaliser le faisceau laser (100) sur l'arête de l'instrument de manière que l'axe du faisceau laser (100) et la tangente au fil de l'instrument soient sensiblement concourants, et
— des moyens (3) pour déplacer le spot de focalisation du faisceau laser (100) sur la totalité du fil de l'instrument acéré à une vitesse déterminée, pour assurer la fusion du morfil dans la zone centrale du faisceau laser.

13. Dispositif d'ébavurage selon la revendication 12 et de vitrification d'une zone superficielle de matériau de l'instrument ayant une dimension $\omega o$ suivant une première direction parallèle à une génératrice de la paroi de l'instrument et une épaisseur Zs déterminée selon une deuxième direction perpendiculaire à cette première direction, caractérisé en ce que les moyens (1) pour engendrer un rayonnement laser comportent une tête d'émission laser (10) émettant le faisceau laser avec une puissance lumineuse Pa déterminée par l'équation

$$Pa = \frac{2\pi\,\omega o^2\,K\,(Tv-Ts)}{R\left(1-\sin\dfrac{\alpha}{2}\right)}$$

dans laquelle

— $\alpha$ est l'angle d'aiguisage de l'instrument,

— $R = \dfrac{Zs}{1-\sin\dfrac{\alpha}{2}}$

est le rayon de courbure de la surface gauche constituant le fil de coupe,
— K représente le coefficient de conductibilité thermique du matériau constituant l'instrument, et
— Tv et Ts représentent respectivement la température du vaporisation et la température de fusion du matériau constituant l'instrument exprimées en degrés centigrades,

et en ce que les moyens (4, 31) pour déplacer le spot comportent des moyens pour ajuster la vitesse de déplacement à une valeur déterminée par l'équation

$$Vs = \frac{8\,\omega o\,H}{\pi\,R^2\left(1-\sin\dfrac{\alpha}{2}\right)^2}\left(\frac{Tv-Ts}{Tv+273}\right)^2$$

dans laquelle H représente le coefficient de diffusivité thermique du matériau consituant l'instrument.

14. Dispositif selon la revendication 13, caractérisé en ce que la tête d'émission laser (10) comporte des moyens pour émettre le faisceau laser (100) en continu.

15. Dispositif selon la revendication 14, caractérisé en ce que les moyens (10) pour engendrer un rayonnement laser comportent en outre des moyens (11) de modulation de l'émission laser par des impulsions ayant une fréquence voisine de 300 kHz.

16. Dispositif selon la revendication 13, caractérisé en ce que les moyens (10) pour engendrer un rayonnement laser comportent des moyens (11) pour émettre le faisceau laser (100) sous la forme d'une suite d'impulsions ayant chacune une durée $\tau$ sensiblement égale au rapport $\dfrac{L}{Vs}$ dans lequel L est la longueur totale du fil de l'instrument.

17. Dispositif selon la revendication 16, caractérisé en ce que les moyens (10) pour engendrer un rayonnement laser comportent des moyens (11) pour moduler les impulsions à une fréquence voisine de 300 kHz.

18. Dispositif selon l'une des revendications 12 à 17, caractérisé en ce que la tête d'émission laser (10) émet un rayonnement laser en mode TEMoo, l'intensité du rayonnement étant sensiblement distribuée en fonction de la distance à l'axe du faisceau selon une courbe de Gauß.

19. Dispositif selon la revendication 12, caractérisé en ce que les moyens (2) pour focaliser le faisceau laser (100) comportent:

— un dispositif de visée de la partie acérée de l'instrument comportant des moyens (22) pour émettre un faisceau d'alignement (220) et au moins un miroir semi-transparent (221) pour rendre le faisceau d'alignement concentrique au faisceau laser,
— une lentille (20) pour focaliser le faisceau laser (100) et le faisceau d'alignement (220) sur au moins un point de la partie acérée de l'instrument, et
— un détecteur de rayonnement laser (21) délivrant un signal de référence (Sr) représentatif de la focalisation du faisceau laser (100) ou du faisceau d'alignement (220) sur l'arête.

20. Dispositif selon la revendication 19, caractérisé en ce que le détecteur (21) est constitué par:

— un réseau de photodiodes (211, 212, 213) délivrant respectivement pour chaque tache de diffraction du faisceau laser par l'arête un signal élémentaire (se 1, se 2, se 3) d'amplitude déterminée, et
— un circuit logique (214) délivrant le signal de référence (Sr) en réponse à l'ensemble des signaux élémentaires (se 1, se 2, se 3).

21. Dispositif selon la revendication 19, caractérisé en ce que les moyens (3) pour déplacer le spot de focalisation du faisceau laser (100) comportent:

— une cellule de déflexion (31) du faisceau laser (100) dans une direction x définie comme étant une direction sensiblement parallèle à la tangente de l'arête de l'instrument et dans une direction y définie comme étant une direction perpendiculaire à cette direction x et à la direction Z de propagation du faisceau laser (100), la cellule de déflexion (31) étant disposée entre la tête d'émission laser (10) et la lentille de focalisation (20) et permettant en outre la transmission et la déflexion du fasceau d'alignement (220), et
— des moyens (32) de déplacement du spot de focalisation du faisceau laser selon la direction Z.

22. Dispositif selon la revendication 21, caractérisé en ce que la lentille de focalisation (20) est du type »zoom« et en ce que les moyens (32) de déplacement du spot de focalisation du faisceau laser (100) selon la direction Z comprennent des moyens (32) pour déplacer la lentille de focalisation (20) suivant la direction Z.

23. Dispositif selon la revendication 22, caractérisée en ce que les moyens (3) pour déplacer le spot de focalisation comportent en outre:

— un générateur de fonction (4) délivrant un signal x (t), un signal y (t) et un signal z (t), les signaux x (t), y (t), z (t) étant en coordonnées paramétriques fonctions du temps représentatifs à chaque instant de la loi de courbure de l'arête de l'instrument, la cellule de déflexion (31) répondant aux signaux x (t) et y (t) pour déplacer le faisceau (100) dans les directions x et y respectivement et les moyens (32) pour déplacer la lentille de focalisation répondant au signal z (t) pour déplacer le spot de focalisation dans la direction Z,

— un circuit de prépositionnement (42) du spot de focalisation, le générateur de fonction (41) recevant du circuit de prépositionnement (42) sur une première entrée, dite de commande, un signal de prépositionnement du spot de focalisation sur l'arête de l'instrument et sur une deuxième entrée, dite de correction, le signal de référence (Sr) délivré par le détecteur (21) de rayonnement laser.

24. Dispositif selon la revendication 23, caractérisé en ce que les moyens (3) pour déplacer le spot de focalisation comportent en outre un circuit (43) de commande auxiliaire de la vitesse de déplacement du spot de focalisation, ledit circuit (43) délivrant audit générateur de fonction (41) un signal ajustable de la forme $\sqrt{x'^2+y'^2+z'^2}=Q$ où x', y', z' représentent les dérivées premières

$$\frac{dx}{dt}, \frac{dy}{dt}, \frac{dz}{dt}$$

des signaux x (t), y (t) et z (t).

25. Dispositif selon la revendication 21, caractérisé en ce que les moyens (2) pour focaliser le faisceau laser (100) conportent en outre

— un miroir sphérique (33) disposé sur le chemin optique du faisceau laser (100) en aval du spot de focalisation pour réfléchir le faisceau laser en sens opposé selon le même chemin optique, et

— des moyens pour focaliser le faisceau laser réfléchi sur le détecteur (21) comprenant au moins un deuxième miroir semi-transparent (222) et une lentille de focalisation auxiliaire (24).

26. Instrument acéré d'angle d'aiguisage $\alpha$ déterminé, obtenu par la mise en oeuvre d'un procédé selon l'une quelconque des revendications 1 à 11, caractérisé en ce que le fil (102) de l'instrument est constitué par une surface gauche de rayon de courbure R sensiblement uniforme, la zone de la paroi (103) de l'instrument sous-jacente du fil (102) comportant une bande de matériau vitrifié d'épaisseur Zs selon une direction perpendiculaire à la paroi, le rayon de courbure de la surface gauche constituant le fil étant de la forme

$$R = Zs \; \frac{1}{1-\sin\frac{\alpha}{2}},$$

la bande de matériau vitrifié et la surface gauche constituant le fil présentant une rugosité voisine de 1 μm.

27. Instrument acéré selon la revendication 26 comportant une lame coupante, caractérisé en ce que le fil (102) de l'instrument est constitué par une surface sensiblement hémicylindrique ayant une section droite constituée par un demi-cercle de rayon R.

28. Instrument acéré selon la revendication 26 comportant une pluralité d'arêtes vives et une pointe aiguë constituant le fil (102) de l'instrument, caractérisé en ce que le fil (102) de l'instrument est constitué d'une part, au niveau des arêtes vives, par une surface sensiblement hémicylindrique ayant une section droite constituée par un demi-cercle de rayon R, et, d'autre part, au niveau de la pointe aiguë, par une surface gauche de même rayon de courbure R.

29. Instrument acéré selon la revendication 26 en forme d'aiguille de section sensiblement circulaire, caractérisé en ce que le fil (102) de l'instrument est constitué par une calotte sensiblement sphérique de rayon de courbure R.

## Patentansprüche

1. Verfahren zum Entgraten eines schneidenden Instrumentes mit einer geschärften, scharfen Kante, um die Schneide des Instrumentes zu bilden, dadurch gekennzeichnet, daß es darin besteht,

— ein Laserstrahlbündel (100) mit einer Leistungsdichte zwischen $10^6$ und $10^8$ W/cm$^2$ abzustrahlen,

— das Laserbündel (100) derart auf die Kante des Instrumentes zu fokussieren, daß die Achse des Laserbündels und die Tangente an die Schneide des Instrumentes sich in einem Punkt treffen, und

— den Brennpunkt des Laserbündels (100) über die gesamte Schneide des schneidenden Instrumentes mit einer festgelegten Geschwindigkeit zu verschieben, um das Schmelzen des Grates in der mittleren Zone des Laserbündels zu gewährleisten.

2. Verfahren nach Anspruch 1, um unter anderem auf einem schneidenden Instrument mit einem bestimmten Schliffwinkel $\alpha$ eine Sinterung einer Oberflächenzone des Instrumentes mit einer Abmessung wo in einer ersten Richtung parallel zu einer Erzeugenden der Wand des Instrumentes und einer festgelegten Dicke Zs in einer zu dieser ersten Richtung senkrechten Richtung zu erreichen, dadurch gekennzeichnet, daß es darin besteht, das Laserstrahlenbündel (100) derart zu fokussieren, daß der Brennpunkt einen

Durchmesser 2 $\omega$o hat, die Laserstrahlung mit einer Lichtleistung Pa abzustrahlen, die durch die Formel

$$Pa = \frac{2 \pi \omega o^2 K (Tv - Ts)}{R \left(1 - \sin \frac{\alpha}{2}\right)}$$

bestimmt ist, in der

$$- R = \frac{Zs}{\left(1 - \sin \frac{\alpha}{2}\right)}$$

der Krümmungsradius der die Schneide bildenden gekrümmten Fläche ist,
— K der Koeffizient der Wärmeleitfähigkeit des das Instrument bildenden Materials ist, und
— Tv und Ts die Verdampfungstemperatur bzw. die Schmelztemperatur des das Instrument bildenden Materials in °C darstellen,

und den Brennpunkt des Laserbündels (100) mit einer linearen Geschwindigkeit zu verschieben, die durch die Formel

$$Vs = \frac{8 \omega o H}{\pi R^2 \left(1 - \sin \frac{\alpha}{2}\right)^2} \left(\frac{Tv - Ts}{Tv + 273}\right)^2$$

bestimmt ist, in der H der Koeffizient der Temperaturleitfähigkeit des das Instrument bildenden Materials darstellt.

3. Verfahren nach Anspruch 2, dadurch gekennzeichnet, daß das Laserbündel (100) in der Mode TEMoo abgestrahlt wird, wobei die Strahlungsintensität als Funktion des Abstandes zur Achse des Bündels nach einer Gaußkurve verteilt ist.

4. Verfahren nach Anspruch 2, dadurch gekennzeichnet, daß das Laserbündel (100) kontinuierlich wird.

5. Verfahren nach Anspruch 4, dadurch gekennzeichnet, daß die Abstrahlung des Laserbündels (100) durch Impulse mit einer Frequenz nahe 300 kHz moduliert wird.

6. Verfahren nach Anspruch 2, dadurch gekennzeichnet, daß es darin besteht, das Laserstrahlenbündel (100) in Form einer Impulsfolge abzustrahlen, die jeweils eine Dauer $\tau$ haben, die im wesentlichen gleich der Beziehung $\frac{L}{Vs}$ ist, in der L die Gesamtlänge der Schneide des Instrumentes ist.

7. Verfahren nach Anspruch 6, dadurch gekennzeichnet, daß jeder Laserimpuls mit einer Modulationsfrequenz nahe 300 kHz moduliert wird.

8. Verfahren nach Anspruch 2 zum Entgraten eines schneidenden Instrumentes vom Nadeltyp, dadurch gekennzeichnet, daß es darin besteht, das Laserbündel (100) in Form eines Impulses der Leistung Pa und der Dauer

$$\tau = \frac{R^2}{4 H} \left(1 - \sin \frac{\alpha}{2}\right)^2 \left(\frac{Tv + 273}{Ts - Ts}\right)^2$$

auszusenden, wobei der Brennpunkt des Laserbündels (100) auf die Spitze der Nadel die gesamte Dauer des Impulses fokussiert bleibt.

9. Verfahren nach Anspruch 8, dadurch gekennzeichnet, daß die Energie des Impulses zwischen 0,03 mJ und 0,1 mJ und seine Dauer zwischen 0,3 µs und 10 µs liegt.

10. Verfahren zur Herstellung eines schneidenden, chirurgischen Instrumentes aus einer Stange aus Spezialstahl, bei dem die Stange geschliffen wird, um einen vielflächigen Körper zu bilden, der wenigstens zwei Flächen hat, deren Verschneidung eine scharfe Kante mit einem bestimmten Schliffwinkel $\alpha$ entlang einer fortlaufenden ebenen Linie mit bestimmter Krümmung bildet, wobei
der gesamte vielflächige Körper einer Oberflächenbehandlung unterworfen wird, die ein Feinpolieren der Flächen gestattet,
dadurch gekennzeichnet, daß es überdies noch darin besteht, daß
ein Laserstrahlenbündel (100) mit einem Brennpunktdurchmesser 2 $\omega$o auf wenigstens einen Punkt der scharfen Kante fokussiert wird, wobei die Achse des Laserbündels (100) und die Tangente an die Kurve dieser scharfen Kante sich im wesentlichen in einem Punkt treffen, und
daß der Brennpunkt des Laserbündels (100) über die gesamte Länge der Schneide des Instrumentes verschoben wird, wobei die Achse des Laserbündels (100) und die Tangente an die Kurve dieser scharfen Kante im wesentlichen während der Verschiebung sich treffend gehalten werden, um das Schmelzen des Grates in der mittleren Zone des Laserbündels, eine Sinterung einer Oberflächenzone des Materials des Instrumentes mit einer Abmessung wo in einer ersten Richtung parallel zu einer Erzeugenden der Wand des Instrumentes und einer Dicke Zs nach einer zweiten zur ersten Richtung senkrechten Richtung und die Bildung einer Schneide hervorzurufen, die durch eine gekrümmte Fläche mit bestimmtem Krümmungsradius R gebildet ist, nach der Formel

$$R = \frac{Zs}{1 - \sin \frac{\alpha}{2}}$$

wobei die Laserstrahlung mit einer Lichtleistung

$$Pa = \frac{2\pi\,\omega o^2\,K\,(Tv - Ts)}{R\left(1 - \sin\frac{\alpha}{2}\right)}$$

abgestrahlt wird, in der K den Koeffizienten der Wärmeleitfähigkeit des das Element bildenden Materials und
Tv und Ts die Verdampfungstemperatur bzw. die Schmelztemperatur des das Instrument bildenden Materials, ausgedrückt in °C, darstellen, wobei die Verschiebung des Brennpunktes des Laserbündels mit einer linearen Geschwindigkeit Vs der Formel

$$Vs = \frac{8\,\omega o\,H}{\pi\,R^2\left(1 - \sin\frac{\alpha}{2}\right)^2}\left(\frac{Tv - Ts}{Tv + 273}\right)^2$$

erfolgt, in der H den Koeffizienten der Temperaturleitfähigkeit des das Instrument bildenden Materials darstellt.

11. Verfahren nach Anspruch 10, dadurch gekennzeichnet, daß die Laserabstrahlung in der Mode TEMoo ausgeführt wird, wobei die Strahlungsintensität als Funktion des Abstandes von der Achse des Bündels entlang einer Gaußkurve verteilt ist.

12. Einrichtung zum Entgraten eines schneidenden Instrumentes mit einer geschärften, scharfen Kante, um die Schneide des Instrumentes zu bilden, dadurch gekennzeichnet, daß sie Anordnungen (1) zur Erzeugung einer Laserstrahlung (100) mit einer Leistungsdichte zwischen $10^6$ und $10^8$ W/cm², Anordnungen (2) zum Fokussieren des Laserbündels (100) auf der Kante des Instrumentes, derart, daß die Achse des Laserbündels (100) und die Tangente der Schneide des Instrumentes sich im wesentlichen in einem Punkt treffen, und Anordnungen (3) umfaßt, um den Brennpunkt des Laserbündels (100) über die gesamte Schneide des schneidenden Instrumentes mit einer bestimmten Geschwindigkeit zu verschieben, um das Schmelzen des Grates in der mittleren Zone des Laserbündels zu gewährleisten.

13. Einrichtung zur Entgratung nach Anspruch 12 und zur Sinterung einer Oberflächenzone des Materials des Instrumentes mit einer Abmessung wo in einer ersten Richtung parallel zu einer Erzeugenden der Wand des Instrumentes und einer festgelegten Dicke Zs in einer zweiten zur ersten Richtung senkrechten Richtung, dadurch gekennzeichnet, daß die Anordnungen (1) zur Erzeugung einer Laserstrahlung einen Laserstrahlungskopf (10) aufweisen, der das Laserbündel mit einer Lichtleistung Pa abstrahlt, die durch die Gleichung

$$Pa = \frac{2\pi\,\omega o^2\,K\,(Tv - Ts)}{R\left(1 - \sin\frac{\alpha}{2}\right)}$$

bestimmt ist, in der
$\alpha$ der Schliffwinkel des Instrumentes ist,

$$R = \frac{Zs}{1 - \sin\frac{\alpha}{2}}$$

der Krümmungsradius der die Schneide bildenden gekrümmten Fläche ist,
K den Koeffizienten der Wärmeleitfähigkeit des das Instrument bildenden Materials darstellt, und
Tv und Ts die Verdampfungstemperatur bzw. die Schmelztemperatur des das Instrument darstellenden Materials, ausgedrückt in °C, ist, und daß die Anordnungen (4, 31) zum Verschieben des Brennpunktes Anordnungen zum Einstellen der Verschiebegeschwindigkeit auf einen Wert umfassen, der durch die Formel

$$Vs = \frac{8\,\omega o\,H}{\pi\,R^2\left(1 - \sin\frac{\alpha}{2}\right)^2}\left(\frac{Tv - Ts}{Tv + 273}\right)^2$$

gegeben ist, in der H den Koeffizienten der Temperaturleitfähigkeit des das Instrument darstellenden Materials darstellt.

14. Einrichtung nach Anspruch 13, dadurch gekennzeichnet, daß der Kopf für die Laseremission (10) Anordnungen zum kontinuierlichen Abstrahlen des Laserbündels (100) aufweist.

15. Einrichtung nach Anspruch 14, dadurch gekennzeichnet, daß die Anordnungen (10) zum Erzeugen einer Laserstrahlung überdies eine Anordnung (11) zur Modulation der Laseremission durch Impulse mit einer Frequenz nahe 300 kHz umfassen.

16. Einrichtung nach Anspruch 13, dadurch gekennzeichnet, daß die Anordnungen (10) zur Erzeugung einer Laserstrahlung Anordnungen (11) zur Aufgabe des Laserbündels (100) in Form einer Impulsfolge umfassen, die jeweils eine Dauer $\tau$ haben, die im wesentlichen gleich der Beziehung $\frac{L}{Vs}$ ist, in der L die Gesamtlänge der Schneide des Instrumentes ist.

17. Einrichtung nach Anspruch 16, dadurch gekennzeichnet, daß die Anordnungen (10) zur Erzeugung einer Laserstrahlung Anordnungen (11) zum Modulieren der Impulse mit einer Frequenz nahe 300 kHz umfassen.

18. Einrichtung nach einem der Ansprüche 12 bis 17, dadurch gekennzeichnet, daß der Kopf für die Laseremission (10) eine Laserstrahlung in der Mode TEMoo abgibt, wobei die Strahlungsintensität im wesentlichen als Funktion des Abstandes von der Achse des Bündels nach einer Gaußschen Kurve verteilt ist.

19. Einrichtung nach Anspruch 12, dadurch gekennzeichnet, daß die Anordnungen (2) zum Fokussieren des Laserbündels (100) eine Visiervorrichtung für den schneidenden Teil des Instrumentes mit Anordnungen (22) zur Aussendung eines Ausrichtungsbündels (220) und mit wenigstens einem halbdurchlässigen Spiegel (221), um das Ausrichtungsbündel konzentrisch zum Laserbündel zu machen, eine Linse (20) zum Fokussieren des Laserbündels (100) und des Ausrichtungsbündels (220) auf wenigstens einen Punkt des schneidenden Teiles des Instrumentes, und einen Detektor (21) für Laserstrahlung umfaßt, der ein Bezugssignal (Sr) abgibt, das die Fokussierung des Laserbündels (100) oder des Ausrichtungsbündels (220) auf die Kante darstellt.

20. Einrichtung nach Anspruch 19, dadurch gekennzeichnet, daß der Detektor (21) durch ein Netz von Fotodioden (211, 212, 213), die jeweils für jeden Ablenkungsfleck des Laserbündels durch die Kante ein elementares Signal (se 1, se 2, se 3) festgelegter Amplitude abgeben, und einen logischen Kreis (214) gegeben ist, der das Bezugssignal (Sr) in Abhängigkeit von allen elementaren Signalen (se 1, se 2, se 3) abgibt.

21. Einrichtung nach Anspruch 19, dadurch gekennzeichnet, daß die Anordnungen (3) zum Verschieben des Brennpunktes des Laserbündels (100) eine Ablenkzelle (31) für das Laserbündel (100) in einer Richtung x, die als im wesentlichen parallele Richtung zur Tangente an die Kante des Instrumentes definiert ist, und in einer Richtung y, die als eine Richtung senkrecht zu dieser Richtung x und zu der Richtung Z der Fortschreitung des Laserbündels (100) definiert ist, wobei die Ablenkzelle (31) zwischen dem Kopf der Laseremission (10) und der Fokussierungslinse (20) angeordnet ist und überdies die Übertragung und die Ablenkung des Ausrichtungsbündels (220) gestattet, und Anordnungen (32) zur Verschiebung des Brennpunktes des Laserbündels in der Richtung Z umfaßt.

22. Einrichtung nach Anspruch 21, dadurch gekennzeichnet, daß die Fokussierungslinse (20) vom »Zoom«-Typ ist und daß die Anordnungen (32) zum Verschieben des Brennpunktes des Laserbündels (100) in der Richtung Z Anordnungen (32) zum Verschieben der Fokussierungslinse (20) in der Richtung Z umfassen.

23. Einrichtung nach Anspruch 22, dadurch gekennzeichnet, daß die Anordnungen (3) zum Verschieben des Brennpunktes außerdem einen Funktionsgenerator (4), der ein Signal x (t), ein Signal y (t) und ein Signal z (t) abgibt, wobei die Signale x (t), y (t), z (t) in Parameterkoordinaten Funktionen der Zeit sind, die zu jedem Zeitpunkt dem Gesetz der Krümmung der Kante des Instruments entsprechen, wobei die Ablenkzelle (31) auf die Signale x (t) und y (t) zum Verschieben des Bündels (100) in den Richtungen x bzw. y anspricht, und die Anordnungen (32) zum Verschieben der Fokussierungslinse auf das Signal z (t) anspricht, um den Brennpunkt in der Richtung (Z) zu verschieben, und einen Voreinstellkreis (42) für den Brennpunkt umfassen, wobei der Funktionsgenerator (41) vom Voreinstellkreis (42) über einen ersten Eingang, d. h. Steuereingang, ein Voreinstellsignal für den Brennpunkt auf die Kante des Instrumentes und über einen zweiten Eingang, Korrektureingang, das Bezugssignal (Sr) erhält, das vom Detektor (21) der Laserstrahlung abgegeben wird.

24. Einrichtung nach Anspruch 23, dadurch gekennzeichnet, daß die Anordnungen (3) zum Verschieben des Brennpunktes außerdem einen Hilfssteuerkreis (43) für die Geschwindigkeit der Verschiebung des Brennpunktes umfassen, wobei der Kreis (43) dem Funktionsgenerator (41) ein einstellbares Signal der Formel

$$\sqrt{x'^2 + y'^2 + z'^2} = Q,$$

wo x', y', z' die ersten Ableitungen

$$\frac{dx}{dt}, \frac{dy}{dt}, \frac{dz}{dt}$$

der Signale x (t), y (t) und z (t) darstellen, zuführt.

25. Einrichtung nach Anspruch 21, dadurch gekennzeichnet, daß die Anordnungen (2) zum Fokussieren des Laserbündels (100) außerdem einen sphärischen Spiegel (33) im optischen Weg des Laserbündels (100) hinter dem Brennpunkt, um das Laserbündel in entgegengesetzter Richtung im gleichen optischen Weg zu reflektieren, und Anordnungen zum Fokussieren des reflektierten Laserbündels auf den Detektor (21) umfassen, der wenigstens einen zweiten halbdurchlässigen Spiegel (22) und eine Hilfsfokussierlinse (24) umfaßt.

26. Schneidendes Instrument mit einem bestimmten Schliffwinkel $\alpha$, das man durch Ausführung eines Verfahrens nach einem der Ansprüche 1 bis 11 erhalten hat, dadurch gekennzeichnet, daß die Schneide (102) des Instrumentes von einer gekrümmten Fläche mit im wesentlichen gleichem Krümmungsradius R gebildet ist, wobei die Zone der Wand (103) des Instrumentes unterhalb der Schneide (102) einen gesinterten Materialstreifen mit der Dicke Zs in einer Richtung senkrecht zur Wand aufweist und wobei der Krümmungsradius der die Schneide bildenden gekrümmten Fläche die Formel

$$R = Zs \frac{1}{1 - \sin\frac{\alpha}{2}}$$

hat und der gesinterte Materialstreifen und die die Schneide bildende gekrümmte Fläche eine Rauhigkeit nahe 1 μm aufweist.

27. Schneidendes Instrument nach Anspruch 26 mit einer Schneidklinge, dadurch gekennzeichnet, daß die Schneide (102) des Instrumentes auf einer im wesentlichen halbzylindrischen Fläche gebildet ist, die einen von einem Halbkreis mit dem Radius R gebildeten Querschnitt hat.

28. Schneidendes Instrument nach Anspruch 26 mit einer Vielzahl von scharfen Kanten und einer scharfen Spitze, die die Schneide (102) des Instrumentes bilden, dadurch gekennzeichnet, daß die Schneide (102) des Instrumentes einerseits in der Höhe der scharfen Kanten durch eine im wesentlichen halbzylindrische Fläche, die einen durch einen Halbkreis mit dem Radius R gebildeten Querschnitt hat, und andererseits in der Höhe der scharfen Spitze durch eine gekrümmte Fläche mit dem gleichen Krümmungsradius R gebildet ist.

29. Schneidendes Instrument nach Anspruch 26 in Form einer Nadel mit im wesentlichen kreisförmigem Querschnitt, dadurch gekennzeichnet, daß die Schneide (102) des Instrumentes von einer im wesentlichen sphärischen Kalotte mit dem Krümmungsradius R gebildet ist.

## Claims

1. A method of trimming a sharp instrument having a sharpened edge, characterized in that it comprises:

— emitting a laser beam (100) having a power density lying between $10^6$ and $10^8$ W/cm², 
— focusing the laser beam (100) on the instrument edge whereby the axis of the laser beam (100) and the tangent to the instrument edge are substantially concurrent, and 
— moving the focusing spot of the laser beam (100) along the entire instrument edge at a set speed to melt the wire edge in the central region of the laser beam.

2. A method as in claim 1 for further achieving, on a sharp instrument having a set grinding angle $\alpha$, vitrification of a superficial region of the instrument material, having a dimension $\omega$o in a first direction parallel to a generatrix of the instrument wall and a set thickness Zs in a second direction perpendicular to the first direction, characterized in that it comprises focussing the laser beam (100) whereby the focusing spot may have a diameter of 2 $\omega$o, emitting the laser beam with a luminous power

$$Pa = \frac{2\pi \omega o^2 K (Tv - Ts)}{R \left(1 - \sin \frac{\alpha}{2}\right)}$$

where

$$- R = \frac{Zs}{1 - \sin \frac{\alpha}{2}}$$

is the radius of curvature of the skew surface forming the cutting edge, 
— K represents the coefficient of heat conductivity of the instrument material, and 
— Tv and Ts respectively represent the vaporization temperature and the melting temperature of the instrument material expressed in degrees centigrade,

and moving the spot of the laser beam (100) at a linear speed

$$Vs = \frac{8 \, \omega o \, H}{\pi R^2 \left(1 - \sin \frac{\alpha}{2}\right)^2} \left[\frac{Tv - Ts}{Tv + 273}\right]^2$$

where H represents the coefficient of heat diffusivity of the instrument material.

3. A method as in claim 2, characterized in that the laser beam (100) is emitted in the TEMoo mode, the intensity of the radiation being distributed in depence on the distance to the bram axis according to a Gauß curve.

4. A method as in claim 2, characterized in that the laser beam (100) is continuously emitted.

5. A method as in claim 4, characterized in that the laser beam emission is modulated by pulses having a frequency in the region of 300 kHz.

6. A method as in claim 2, characterized in that the laser beam (100) is emitted as a succession of pulses each having a duration $\tau$ substantially equal to the ratio $\frac{L}{Vs}$ where L is the overall length of the instrument edge.

7. A method as in claim 6, characterized in that each laser pulse is modulated at a modulation frequency in the region of 300 kHz.

8. A method as in claim 2 for trimming a sharp needle-like instrument, characterized in that the laser beam (100) is emitted in the form of a pulse having a power Pa and a duration

$$\tau = \frac{\pi R^2}{4 H} \left(1 - \sin \frac{\alpha}{2}\right)^2 \left[\frac{Tv + 273}{Ts - Ts}\right]^2,$$

the laser beam focusing spot being kept focused on the tip of the needle throughout the duration of the pulse.

9. A method as in claim 8, characterized in that the energy of the pulse ranges from 0.03 to 0.1 mJ and its duration ranges from 0.3 to 10 μs.

10. A method of making a sharp surgical instrument from a rod of special steel, comprising

— grinding said rod to form a polyhedron provided with at least two surfaces that intersect to form a sharp edge having a set grinding angle $\alpha$ and extending along a continuous plane line of set curvature. 
— subjecting the whole of the polyhedron to a surface treatment enabling said surfaces to be finely polished,

characterized in that it further comprises:

— focusing on at least one point of the sharp edge a laser beam in a focusing spot having a diameter of 2 $\omega$o, the axis of the laser beam (100) and the tangent to the curve of said sharp edge beeing substantially concurrent, and

— moving the focusing spot of the laser beam (100) along the entire sharp edge of the instrument, the laser beam axis and the tangent to the curve of said sharp edge being kept substantially concurrent during the motion to melt the wire edge in the central region of the laser beam, to vitrify a superficial region of the instrument material having a dimension $\omega o$ along a first direction parallel to a generatrix of the instrument wall and having a thickness Zs along a second direction perpendicular to said first direction, and to form a cutting edge formed by a skew surface having a set curvature radius

$$R = \frac{Zs}{1 - \sin\frac{\alpha}{2}}$$

the laser beam being radiated with a luminous power

$$Pa = \frac{2\pi\,\omega o^2\,K\,(Tv - Ts)}{R\left(1 - \sin\frac{\alpha}{2}\right)}$$

where

— K represents the coefficient of heat conductivity of the instrument material,
— Tv and Ts respectively represent the vaporization temperature and the melting temperature of the instrument material expressed in degrees centigrade, the movement of the laser beam spot being effected at a linear speed

$$Vs = \frac{8\,\omega o\,H}{\pi\,R^2\left(1 - \sin\frac{\alpha}{2}\right)^2}\left[\frac{Tv - Ts}{Tv + 273}\right]^2$$

where H represents the coefficient of heat diffusivity of the instrument material.

11. A method as in claim 10. characterized in that the laser beam is emitted in the TEMoo mode, the intensity of the radiation being distributed in dependence on the distance to the beam axis according to a Gauß curve.

12. Apparatus for trimming a sharp instrument having a sharpened edge, characterized in that it comprises:

— means (1) for generating a laser beam (100) having a power density lying between $10^6$ and $10^8$ W/cm², 
— means (2) for focusing the laser beam (100) on the instrument edge whereby the axis of the laser beam (100) and the tangent to the instrument edge are substantially concurrent, and
— means (3) for moving the focusing spot of the laser beam (100) along the entire instrument edge at a set speed to melt the wire edge in the central region of the laser beam.

13. Apparatus for trimming the sharpened edge of an instrument, as in claim 12, and for vitrifying a superficial region of the instrument material having a dimension $\omega o$ in a first direction parallel to a generatrix of the instrument wall and a set thickness Zs in a second direction perpendicular to the first direction, characterized in that the laser beam generating means (1) include a laser emission head (10) arranged to emit the laser beam with a luminous power

$$Pa = \frac{2\pi\,\omega o^2\,K\,(Tv - Ts)}{R\left(1 - \frac{\alpha}{2}\right)}$$

where

— $\alpha$ is the grinding angle of the instrument,

— $R = \dfrac{Zs}{1 - \sin\frac{\alpha}{2}}$

is the radius of curvature of the skew surface forming the cutting edge,
— K represents the coefficient of heat conductivity of the instrument material, and
— Tv and Ts respectively present the vaporization temperature and the melting temperature of the instrument material expressed in degree centigrade,

and in that the spot moving means (4, 31) include means for adjusting the speed of movement to a value

$$Vs = \frac{8\,\omega o\,H}{\pi\,R^2\left(1 - \sin\frac{\alpha}{2}\right)^2}\left[\frac{Tv - Ts}{Tv + 273}\right]^2$$

where H represents the coefficient of heat diffusivity of the instrument material.

14. Apparatus as in claim 13, characterized in that the laser radiation head (10) includes means for continuously emitting the laser beam (100).

15. Apparatus as in claim 14, characterized in that the laser beam generating means (1) further include means (11) for modulating the laser emission by pulses having a frequency in the region of 300 kHz.

16. Apparatus as in claim 13, characterized in that the laser beam generating means (1) include means (11) for emitting the laser beam (100) as a succession of pulses each having a duration $\tau$ substantially equal to the ratio $\dfrac{L}{Vs}$ where L is the overall length of the instrument edge.

17. Apparatus as in claim 16, characterized in that the laser beam generating means (1) include means (11) for modulating the pulses at a frequency in the region of 300 kHz.

18. Apparatus as in any one of claims 12 to 17, characterized in that the laser emission head (10) emits a laser beam in the TEMoo mode, the intensity of the radiation being distributed in dependence on the distance to the beam axis substantially according to a Gauß curve.

19. Apparatus as in claim 12, characterized in that the laser beam focusing means (2) include:

— an arrangement for sighting the sharp portion of the instrument, which includes means (22) for emitting an aligning beam (220) and at least one semi-transparent mirror (221) for rendering the aligning beam concentric with the laser beam,
— a lens (20) for focusing the laser beam (100) and the aligning beam (220) on at least one point of the sharp portion of the instrument, and
— a laser beam detector (21) arranged to supply a reference signal (Sr) representative of the focusing of the laser beam (100) or of the aligning beam (220) on the edge.

20. Apparatus as in claim 19. characterized in that the detector (21) consists of:

— a network of photodiodes (211, 212, 213) arranged respectively to supply for each diffraction spot of the laser beam caused by the edge an elementary signal (se 1, se 2, se 3) of set amplitude, and
— a logic circuit (214) for supplying the reference signal (Sr) in response to the elementary signals (sel, se 2, se 3).

21. Apparatus as in claim 19, characterized in that the means (3) for moving the focusing spot of the laser beam (100) include:

— a cell (31) for deflecting the laser beam (100) in a direction x defined as being a direction substantially parallel to the tangent of the instrument edge and in a direction y defined as being a direction perpendicular to the x direction and to a laser beam propagation direction z, the deflection cell (31) being disposed between the laser emission head (10) and the focusing lens (20) and further enabling transmission and deflection of the aligning beam (220), and
— means (32) for moving the laser beam focusing spot in the z direction.

22. Apparatus as in claim 21, characterized in that the focusing lens (20) is of the »zoom« type and in that the means (32) for moving the laser beam focusing spot in the z direction include means (32) for moving the focusing lens (20) in the z direction.

23. Apparatus as in claim 22, characterized in that the focusing spot moving means (3) further include:

— a function generator (4) for supplying a signal x (t), a signal y (t) and a signal z (t), the signals x (t), y (t) and z (t) being, in terms of parametric coordinates with respect to time, representative at each instant of the law governing the curvature of the instrument edge, the deflection cell (31) being responsive to the signals x (t) and y (t) for moving the beam (100) in the x and y directions respectively and the focusing lens moving means (32) being responsive to the signal z (t) for moving the focusing spot in the z direction,
— a circuit (42) for prepositioning the focusing spot, the function generator (41) being arranged to receive from the prepositioning circuit (42) on a first, control, input, a signal for prepositioning the focusing spot on the instrument edge and on a second, correction, input, the reference signal (Sr) issued by the laser beam detector (21).

24. Apparatus as in claim 23, characterized in that the focusing spot moving means (3) further include an auxiliary control circuit (43) for controlling the speed at which the focusing spot moves, said circuit (43) issuing to said function generator (41) an adjustable signal expressed as $\sqrt{x'^2 + y'^2 + z'^2} = Q$ where $x'$, $y'$ and $z'$ represent the first derivatives

$$\frac{dx}{dt}, \quad \frac{dy}{dt} \quad \text{and} \quad \frac{dz}{dt}$$

of signals x (t), y (t) and z (t).

25. Apparatus as in claim 21, characterized in that the laser beam focusing means (100) further include:

— a spherical mirror (33) disposed on the optical path of the laser beam (100) downstream of the focusing spot for reflecting the laser beam in the opposite direction along the same optical path, and
— means for focusing the reflected laser beam on the detector (21), including at least a second semi-transparent mirror (222) and an auxiliary focusing lens (24).

26. A sharp instrument having a set sharpening angle $\alpha$ and obtained by carrying out a method as in any of claims 1 to 11, characterized in that the edge (102) of the instrument is formed by a skew surface having a substantially uniform curvature radius R, the region of the instrument wall (103) subjacent the edge (102) comprising a strip of vitrified material having a thickness Zs in a direction perpendicular to the wall, the radius of curvature of the skew surface forming the edge being expressed as

$$R = Zs \frac{1}{1 - \sin \frac{\alpha}{2}},$$

the strip of vitrified material and the skew surface forming the edge having a rugosity of 1 μm.

27. A sharp instrument as in claim 26 having a cutting blade, characterized in that the instrument edge (102) is formed by a substantially hemicylindrical surface having a cross-section of semicircular shape of radius R.

28. A sharp instrument as in claim 26 having a plurality of sharp edge portions and a sharp point together forming the instrument edge (102), characterized in that the instrument edge (102) is formed firstly, along the sharp edge portions, by substantially hemicylindrical surfaces each having a cross-section of semicircular shape of radius R, and secondly, at the sharp point, by a skew surface having the same curvature radius R.

29. A sharp instrument as in claims 26 in the form of a needle of substantially circular cross-section, characterized in that the edge (102) of the instrument is formed by a rounded tip of curvature radius R.

FIG. 1

FIG. 2a

FIG. 2b

FIG. 2c

FIG. 2d

FIG. 2e

FIG. 2f

FIG. 2g

FIG. 3a

FIG. 3b

FIG. 4a

FIG. 4b

FIG. 4c

FIG. 4d

FIG. 5

FIG. 6

FIG. 7a

FIG. 7b

FIG. 7d

FIG. 7c